# EUROPEAN PATENT APPLICATION

(11) **EP 4 687 109 A1**
(43) Date of publication of application: **04.02.2026**
(21) Application number: 24306279.1
(22) Date of filing: 30.07.2024
(51) Int. Cl.: G06V 10/25, G06V 10/26, G06V 10/44, G06V 10/762, G06V 10/82, G06V 20/62, G06V 30/18, G06V 30/414, G06V 30/422

(54) **PROCESSING A GRAPH REPRESENTING AN IMAGE OF A TECHNICAL DRAWING**

(71) Applicant: Dassault Systèmes, 78140 Vélizy-Villacoublay (FR)
(72) Inventor: NAILLON, Maxime, 78140 Vélizy-Villacoublay (FR)
(74) Representative: Bandpay & Greuter

(57) **Abstract**

The disclosure concerns a graph processing method. The graph represents an image of a technical drawing comprising a view and a technical annotation. The method comprises, for each view, providing the graph. The graph comprising nodes and edges. Each node corresponds to a classification of pixels into a semantic class of a predetermined set. Each edge connects two nodes either if the two nodes represent neighboring pixels or if the two nodes represent pixels distant from each other below a predetermined threshold. The set includes geometry, dimension, dimension-related symbol. The method comprises clustering, based on the graph topology: nodes corresponding to the geometry class, to reconstruct the geometries in the view, and nodes corresponding to the dimension and dimension-related symbol classes, to reconstruct the annotations of the view. The method comprises, associating reconstructed annotations to reconstructed geometries based on a detected position of the annotations and on the graph topology.

## Description

### TECHNICAL FIELD

The disclosure relates to the field of computer programs and systems, and more specifically to a method, system and program for processing a graph representing an image of a technical drawing.

### BACKGROUND

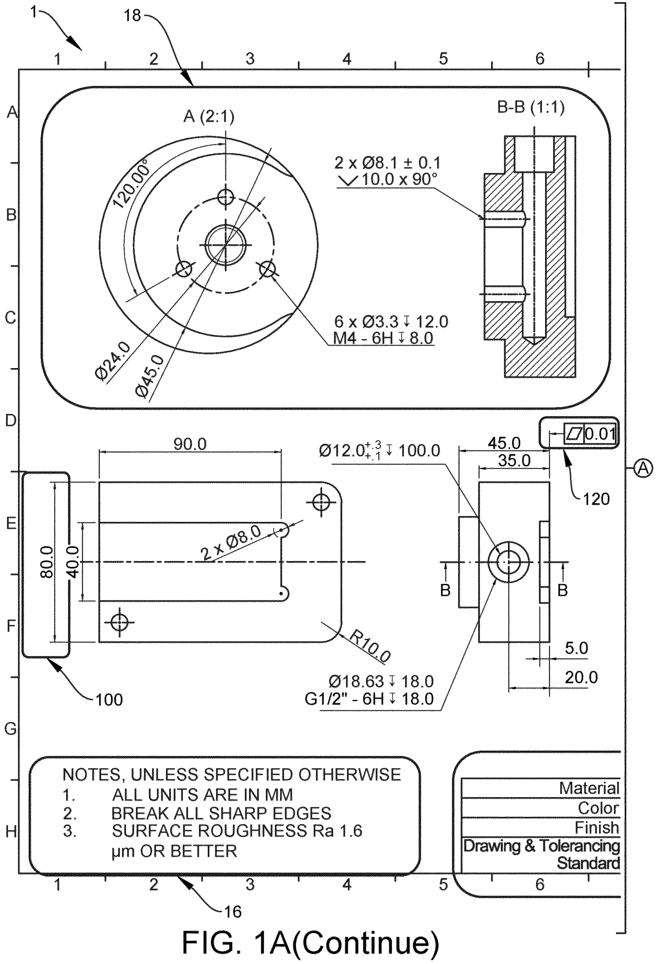

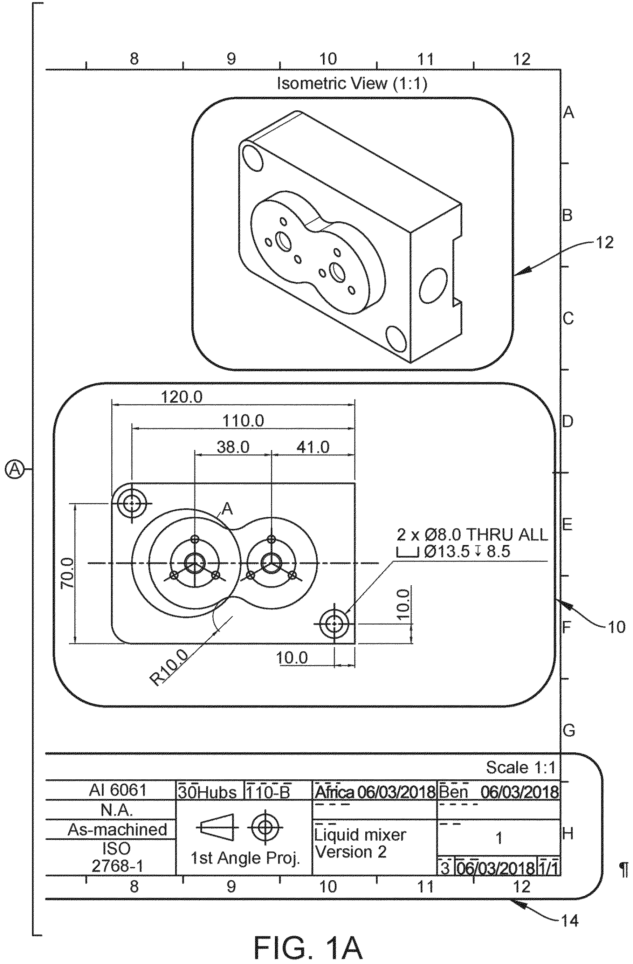

A technical drawing is a 2D representation of a technical object (e.g. a mechanical part, in which case the drawing may also be referred to as "mechanical drawing", or a building) made of projection views and sections (a representation where the object is virtually cut). The object may be a single mechanical part or an assembly of mechanical parts, or a building. All the views enable to recreate the 3D of the object, *e.g.* through a reconstruction on a CAD software. In a single part drawing or building drawing, geometry of the object may be dimensioned with tolerances, such that the object is completely defined in the drawing to be produced with the expected dimensions and quality. Assembly drawings enable to understand a complete mechanical assembly. For decades, these drawings have been done manually, then through 2D computed design and stored on paper, microfilms, or pixel scanned images. FIG. 1A shows an example of a technical drawing, which is a mechanical drawing of a mechanical part.

The mechanical engineer/designer may need, *e.g.* for manufacturing purposes, to convert an image of picture of a technical drawing into a numerical model thereof (referred to as numerical technical drawing). Conversion into the 2D numerical drawing may be the first step towards generating a 3D part. The reconstructed 3D part may be used to recreate the real object with any kind of manufacturing processes, such as NC milling, 3D printing, lost wax casting. Another use case is being able to compare the generated numerical 3D part with a 3D scan point cloud of the real part to detect defects and wear. Still, the numerical drawing in itself may be used and is enough in many cases. The drawing may serve as the reference and validation of a real mechanical object. For example, laser or waterjet cutting are mainly focused on the 2D representation and may directly work with the numerical drawing by exporting it into a DXF or other file format. Many fields use technical drawings with similar patterns and elements to extract. For example, building drawings are close to assemblies of mechanical parts. In this case, an application may be computation of area or material consumption, based on exact 2D geometry.

Within this context, there is still a need for an improved method for detection of technical data in an image of a technical drawing.

### SUMMARY

It is therefore provided a computer-implemented method for processing a graph. The graph represents an image of a technical drawing comprising at least one view and at least one technical annotation. The method comprises, for each view of the at least one view, providing the graph. The graph comprising nodes and edges. Each node corresponds to a classification of one or more pixels in the view into a semantic class of a predetermined set of semantic classes. Each edge connects two nodes either if the two nodes represent neighboring pixels or if the two nodes represent pixels distant from each other below a predetermined threshold. The set of semantic classes includes at least the following classes: geometry, dimension, dimension-related symbol. The method further comprises, for each view of the at least one view, clustering, based on the graph topology: nodes corresponding to the geometry class, to reconstruct the geometries in the view, and nodes corresponding to the dimension and dimension-related symbol classes, to reconstruct the technical annotations of the view. The method further comprises, for each view of the at least one view, associating reconstructed technical annotations to reconstructed geometries based on a detected position of the technical annotations and based on the graph topology.

The method may comprise one or more of the following:
- providing the graph comprises:
   ∘ determining a skeleton of the view by making lines in the technical drawing having a thickness smaller than a predefined threshold;
   ∘ determining traces of the skeleton, each trace being a line ending at junction points, a junction point being a pixel of the skeleton having at least three neighbors in the skeleton; and
   ∘ defining each graph node as representing a respective trace;
- making lines in the view having a thickness smaller than a predefined threshold consists in making the lines having 1 pixel thick;
- the providing of the graph further comprises defining the edges of the graph by:
   ∘ defining first edges each connecting two nodes if the two traces represented by the two nodes are pixelwise connected; and
   ∘ defining second edges each connecting two nodes if the two traces represented by the two nodes are not pixelwise connected but distant below a predefined number of pixels;
- providing the graph further comprises applying a machine-learnt segmentation function configured to label each node of the graph into a semantic class of the set of semantic classes;
- the method further comprises, prior to providing the graph, machine-learning the segmentation function;
- clustering the nodes corresponding to the geometry class comprises:
   ∘ splitting each node having the geometry class into candidate segments;
   ∘ grouping the candidate segments into either line segments or arc segments according to a grouping criterion which rewards smallness of an angle deviation for line segments and similarity in length and angle deviation for arc segments using predetermined thresholds;
   ∘ grouping together line segments and/or arc segments linking a pair of connected nodes to reconstruct the geometries, wherein two line segments are grouped if they a have a same axis and are connected by a segment extremity and two arc segments are grouped if they have a same center and radius and are connected by at least one arc extremity;
- clustering the nodes corresponding to the dimension-related symbol and dimension classes comprises grouping nodes of the dimension and dimension-related symbol classes according to a grouping criterion that rewards position and/or orientation similarity;
- the dimension-related symbol class includes the subclasses arrow, dimension main line, and dimension extension line, and wherein the method further comprises filtering the clustered nodes of the dimension-related symbol class and dimension class according to the following rules:
   ∘ an arrow is in the same direction as a related dimension main line or connected to it; and
   ∘ a dimension extension line is perpendicular or locally perpendicular to a related dimension main line or a related arrow;
- associating reconstructed technical annotations to reconstructed geometries based on a detected position of the technical annotations and based on the graph topology comprises linking the reconstructed technical annotations to their corresponding, according to the graph topology, reconstructed geometries, according to the following rules:
   ∘ for linear or angle dimension annotations, a dimension text is linked to a dimension main line, itself link to an arrow if any, itself linked to a dimension extension line if any, itself link to a geometry; and
   ∘ for diameter or radius dimension annotations, a dimension text is linked to a dimension main line, itself link to an arrow if any, itself link to a geometry;
- associating reconstructed technical annotations to reconstructed geometries based on a detected position of the technical annotations and based on the graph topology further comprises:
   ∘ detecting a text and/or symbol of the technical annotations and a position of the detected text and/or symbol; and
   ∘ for each reconstructed technical annotation, associating the detected text and/or symbol to a corresponding dimension line based on a position proximity; and/or
- associating reconstructed technical annotations to reconstructed geometries based on a detected position of the technical annotations and based on the graph topology further comprises filtering the associated detected text and/or symbol of each reconstructed technical annotation according to the following rules:
   ∘ a linear or angle dimension text must be linked to two geometries; and
   ∘ a radius or diameter dimension text must be linked to a single geometry.

It is further provided a computer program comprising instructions for performing the method.

It is further provided a computer readable data storage medium having recorded thereon the computer program.

It is further provided a computer system comprising a processor coupled to a memory, the memory having recorded thereon the computer program.

### BRIEF DESCRIPTION OF THE DRAWINGS

Non-limiting examples will now be described in reference to the accompanying drawings, where:
- FIG.s 1A to 29 illustrate the method; and

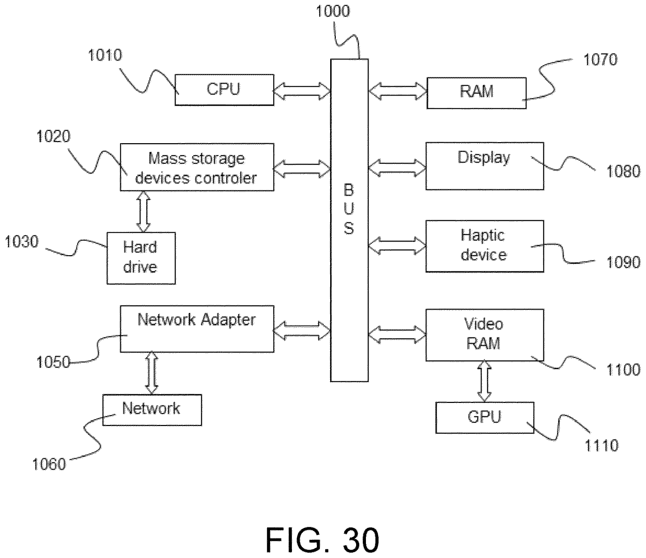

- FIG. 30 shows an example of the computer system.

### DETAILED DESCRIPTION

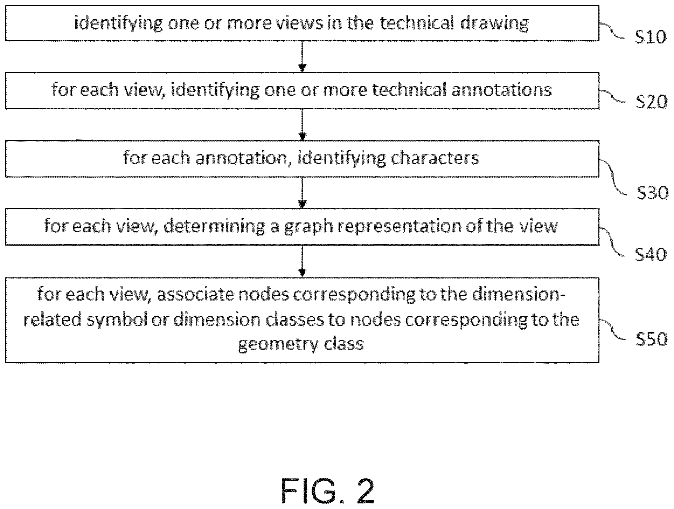

With reference to the flowchart of FIG. 2, it is proposed a computer-implemented method for detection of technical data in an image of a technical drawing. The technical drawing comprises at least one view of a technical object and at least one technical annotation. The method comprises identifying S10 one or more views in the technical drawing by applying a view-splitting module configured for view identification in a technical drawing. The method further comprises, for each identified view, identifying S20 one or more technical annotations in the view by applying an annotation-detection module configured for technical annotation identification in the view. The method further comprises, for each identified technical annotation, identifying S30 characters in the technical annotation by applying a text-recognition module configured for identifying characters in a technical annotation. The method further comprises, for each identified view, determining S40 a graph representation of the view by applying a graph module configured for determination of a graph representation of a view. The graph representation comprises nodes and edges. Each node corresponds to a classification of one or more pixels in the view into a semantic class of a predetermined set of semantic classes. Each edge connects two nodes either if the two nodes represent neighboring pixels or if the two nodes represent pixels distant from each other below a predetermined threshold. The set of semantic classes include at least the semantic classes geometry, dimension and dimension-related symbol. The method further comprises, for each identified view, using the graph topology and the identified characters to associate S50 nodes corresponding to the dimension-related symbol or dimension classes to nodes corresponding to the geometry class. The method may be referred to as "the reconstruction method", as it may form or may be part of a method for reconstruction of a numerical model of the technical drawing from the image.

The reconstruction method forms an improved solution for detection of technical data in an image of a technical drawing.

Notably, the method forms a step toward obtention of a numerical model of the technical drawing, based only on its image. Indeed, the method identifies all necessary technical data to obtain such numerical model: views, technical annotations, and characters in the annotations. The method also creates (i.e. numerically) the associations between the geometries and annotations (symbols and dimensions) in the drawing. All these identified technical data and obtained associations may be processed so as to obtain a complete numerical model of the technical drawing, with notably the associations being exploitable such that, for example, modifying numerically a dimension in the model causes corresponding modification of an associated geometry and/or of an associated symbol (*e.g*. a dimension arrow). Furthermore, each module may comprise a trained neural network to perform their respective task, such that the numerical drawing reconstruction benefits from the power of machine-learning. The method is thus an efficient tool that assists the user in the reconstruction of a semantic numerical drawing from its picture. The graph method which is discussed hereinafter and may be part of the reconstruction method, is an advantageous tool in this context, allowing the determination and use of the graph representation of the numerical drawing (or rather each view thereof), which is an efficient tool for numerical drawing reconstruction.

The reconstruction method may notably form or be part a numerical drawing reconstruction process which takes as input the image of the technical drawing and outputs a numerical model thereof. The process may for that comprise applying the method, and as a further step, processing the views, annotations and characters identified by the method, as well as the associations identified by the method between geometries in the views and technical annotations, to obtain a numerical model representing the drawing (which may be referred to as "numerical drawing"). This numerical model may be a visual representation of the drawing and/or a file capturing such visual representation (*e.g*. a file of specifications of pixel positions of the identified geometries and technical annotations), where the technical annotations (*e.g*. the dimension texts) identified by the method are editable, and geometries and technical annotations are constrained by the dimensions and associations identified by the method (i.e. modifying a dimension text modifies accordingly the associated geometry and (if any) the associated symbol(s) (arrow, dimension main line, dimension extension line)). Processing the views, annotations and characters identified by the method to obtain the numerical model may be performed by any suitable method (gathering what has been identified by the method into the numerical model being a matter of implementation). The numerical model may be converted into a DXF file (*e.g*. as a further step of the method).

Additionally or alternatively, where the technical drawing is a mechanical drawing of a mechanical part, the numerical drawing reconstruction process may be included in a manufacturing process which may comprise performing the numerical drawing reconstruction process to obtain the numerical drawing, converting it into a DXF file of the technical drawing, and using the DXF file for manufacturing the mechanical part by laser cutting or water jet cutting. As known *per se,* manufacturing by laser cutting or water jet cutting may be directly performed using the DXF file, by feeding the DXF file to the laser cutter or water jet cutter which processes it and manufactures the mechanical part according to the specifications defined in the DXF file. Using the DXF file for manufacturing the mechanical part by laser cutting or water jet cutting may comprise:
- feeding the DXF file as input to a laser cutter or a water jet cutter; and
- by the laser cutter or water jet cutter, manufacturing the mechanical part by processing the DXF file, as known in the art of laser cutting/water jet cutting.

Additionally or alternatively to the above-discussed inclusion of the reconstruction method in a numerical drawing reconstruction process or laser cutting or water jet cutting manufacturing process, the method is also an image processing method, that processes the image of the numerical drawing to identify technical data in said image. The image may be the result of a scan of a paper technical drawing. Alternatively, the image may be the result of an entirely numerical process of design of the technical drawing. In any case, the method processes the image, and notably its pixels, to infer the relevant technical data in the image.

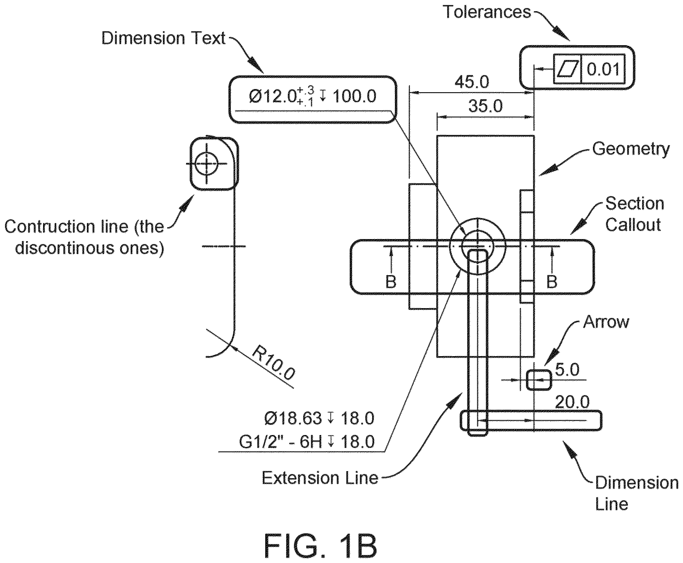

As previously discussed, a technical drawing is a 2D representation of a technical object (*e.g*. a mechanical part, in which case the drawing may also be referred to as "mechanical drawing", or a building) made of projection views and sections (a representation where the object is virtually cut). The object may be a single mechanical part or an assembly of mechanical parts (which may also be referred to as a mechanical part, as an assembly of mechanical parts is itself a mechanical part), or a building. All the views enable to recreate the 3D of the object, *e.g*. through a reconstruction on a CAD software. In a single part drawing or building drawing, geometry of the object may be dimensioned with tolerances, such that the object is completely defined in the drawing to be produced with the expected dimensions and quality. Assembly drawings enable to understand a complete mechanical assembly. For decades, these drawings have been done manually, then through 2D computed design and stored on paper, microfilms, or pixel scanned images. FIG. 1A shows an example of a technical drawing 1, which is a mechanical drawing of a mechanical part. FIG. 1B shows a zoom on a view of FIG. 1A with all its technical annotations.

Any technical drawing in the present disclosure comprises one or more views. Each view is a view of the technical object (mechanical part or building) represented in the technical drawing. Each view in the technical drawing may belong to one of the following types of views: main view, isometric view, section, title block, and other. An isometric view is a 3D view of the object. A section is as section view or sectional view of the object according to one planar section thereof, which is a concept known *per se.* It consists in a 2D view of the object corresponding to a cut of the object by a plane. A main view, also referred to as a principal view, is a 2D view of the object seen from one side (*e.g*. from above, from below, from behind, front view, or side view) without sections but with the dimension annotations. The type "other" may include all the possible other types of views that may be found in a technical drawing, including for example: a text describing a material, a title block, a block of notes in the technical drawing, or a detailed view. A detailed view is a zoomed view of the object or a portion thereof. A detailed view may include or be associated to a section view. The example technical drawing 1 of FIG. 1A comprises a main view 10, an isometric view 12, a title block 14, a note block 16, and a detailed view 18 associated with a section view.

Any technical drawing in the present disclosure also comprises one or more technical annotation. Each technical annotation herein is associated with a respective view and may therefore be referred to as technical annotation "in the view". A technical annotation is a sequence of one or more characters (letters and/or numbers) and/or symbols describing a technical property of the object, such as a geometry, dimension, construction feature, and/or tolerance. Each annotation herein may belong to one of the following types: text dimension (*i.e*. a text that describes a dimension of a geometry of the object represented in the drawing), text other (*i.e*. any other text in the drawing which is not a text dimension), and symbol. For example, the technical drawing 1 of FIG. 1A comprises a dimension annotation 100 and a tolerance annotation (*i.e*. belonging to the type text other) 120. Any technical annotation herein, and notably any dimension text, may comprise a main text and one or both of: a tolerance bottom (*i.e*. a text indicating a tolerance value relative to the technical annotation and located on the bottom of the annotation, such as a minimal bound tolerance value) and/or a tolerance top (*i.e.* a text indicating a tolerance value relative to the technical annotation and located on the top of the annotation, such as a maximal bound tolerance value). A tolerance bottom or top is not the same object as a tolerance annotation (like annotation 120 in FIG. 2) and is not as such a technical annotation in itself: it is part of a technical annotation and associated to a main text thereof. An example of top/bottom tolerance is "± a threshold value" for a dimension.

The reconstruction method is for detection of technical data in an image of a technical drawing. The means that the method takes as input the image of a technical drawing and performs detection of technical data in the image, *i.e.* that is technical data relative to the object (building or mechanical part) represented by the drawing. Specifically, the method detects and outputs views (*e.g*. in the form of coordinates and dimensions of bounding boxes of each view as further discussed hereinafter), technical annotations in the views (*e.g*. in the form of coordinates and dimensions of bounding boxes of each annotation as further discussed hereinafter), technical characters forming the technical annotations (*e.g*. in the any format for encoding characters), and associations between geometries and annotations (*e.g*. in the form of any appropriate indexation and association between indexations, or any other suitable implementation).

The method may comprise an initial step of providing the image of technical drawing. As previously discussed, the technical drawing image may result from a step of design of the drawing, for example on a CAD software or CAD system. Providing the image of drawing may comprise performing this design step and storing the drawing as an image. Alternatively, the technical drawing image may be a scan of a technical drawing (*e.g*. on paper). Providing the image of the technical drawing may in this case comprise scanning the technical drawing to obtain the image. Yet alternatively, regardless of whether the image is obtained from a scan or a previous design process, providing the image may simply consist in retrieving/downloading/obtaining the image from a (e.g. distant) memory or server or database where the image has been stored further to its obtention through scan or previous design process.

Still referring to the flowchart of FIG. 2, the reconstruction method comprises identifying S10 one or more views (*e.g*. all views) in the technical drawing. This identification is done by applying a view-splitting module. The view-splitting module is a function configured to take as input the image and to perform view identification in a technical drawing, that is identifying the views in the technical drawings. The view-splitting module may for example, for each view, output a (*e.g*. rectangular) bounding box around the view and/or coordinates of the bounding box (*e.g*. the 2D coordinates of the center of the box, its height and its width for a rectangular bounding box. The view-splitting module may for example output the coordinates of the bounding box without visual rendering of the box or may output the visual rendering of the box (*i.e*. around the view) in addition to the coordinates. The view-splitting module may further output, for each view, a classification (*e.g*. associated with the bounding box or its set of coordinates) of the view in one semantic class of a predetermined set of semantic classes. The set of semantic classes comprises the following semantic classes: main view, isometric view, section, title block, and other (*i.e.* the types of views discussed above). In other words, the view splitting module may be configured for view detection in a technical drawing and classification of each detected view in one semantic class of the predetermined set of semantic classes. At S10, the view-splitting module may optionally further output a visual rendering of the view identification, by outputting the drawing image with all the bounding boxes around all the identified views. For example, each semantic class may be associated with a color, such that each bounding box in the visual rendering is colored with the color of its class.

The view-splitting module may comprise or consist in a neural network, also referred to as the view-splitting neural network, and the reconstruction method may comprise, *e.g*. as part of an initial training step (also referred to as "offline stage", or finetuning of a pretrained model), training the view-splitting neural network. The training of the view-splitting neural network is further discussed hereinafter.

The reconstruction method further comprises, for each identified view, identifying S20 one or more technical annotations in the view (*e.g*. all technical annotations in the view). The identification S20 is performed by applying an annotation-detection module. The annotation-detection module is a function configured for taking as input the view and performing technical annotation identification in the view, *i.e.* identifying all technical annotations in the view. The annotation-detection module may for example, for each technical annotation in the view, output a (*e.g*. rectangular) bounding box around the annotation and/or coordinates of the bounding box (*e.g*. the 2D coordinates of the center of the box, its height and its width for a rectangular bounding box. The annotation-detection module may for example output the coordinates of the bounding box without visual rendering of the box or may output the visual rendering of the box (*i.e*. around the annotation) in addition to the coordinates. The annotation-detection module may further output, for each annotation, a classification (*e.g*. associated with the bounding box or its set of coordinates) of the annotation in one semantic class of a predetermined set of semantic classes. The set of semantic classes comprises the following semantic classes: text dimension, text other, and symbol (*i.e*. the types of technical annotations discussed above). In other words, the annotation-detection module is configured for technical annotation detection in a view of a technical drawing and classification of each detected technical annotation into one semantic class of a predetermined set of semantic classes comprising the following semantic classes: text dimension, text other, and symbol. At S20, the annotation-detection module may optionally further output, for each view, a visual rendering of the annotation identification, by outputting the drawing image with all the bounding boxes around all the identified annotations in all views. For example, each semantic class may be associated with a color, such that each bounding box in the visual rendering is colored with the color of its class.

The annotation-detection module may comprise or consist in a neural network, also referred to as the annotation-detection neural network, and the reconstruction method may comprise, *e.g.* as part of the initial training step, training the annotation-detection neural network.

The method may comprise a training of the annotation-detection neural network and/or a training of the view-splitting neural network. Alternatively, training the annotation-detection neural network and/or a training the view-splitting neural network may be performed beforehand, that is prior to execution of the method.

As known *per se* from the field of machine-learning, the processing of an input by a neural network includes applying operations to the input, the operations being defined by data including weight values or parameters. Learning a neural network thus includes determining values of the weights/parameters based on a dataset configured for such learning, such a dataset being possibly referred to as a learning dataset or a training dataset. For that, the dataset includes data pieces each forming a respective training sample or training example. The training samples/examples represent the diversity of the situations where the model is to be used after being learnt. Any training dataset herein may comprise a number of training samples/examples higher than 1000, 10000, 100000, or 1000000. In the context of the present disclosure, by "learning/training a neural network based on a dataset", it is meant that the dataset is a learning/training dataset of the neural network, based on which the values of the weights/parameters are set.

As known *per se* from machine-learning, a neural network may be defined by its architecture, parameters, and hyperparameters. The architecture consists of layers, starting with the input layer whose neuron count may be determined by the dimensionality of the input data. This layer is followed by several hidden layers with a given number of neurons and activation functions. These layers and neurons define the network's depth and width, while the activation functions may introduce nonlinearity into the model. The output layer may have as many neurons as the variables in the output data. The interconnections between these layers defines the topology of the neural network. The parameters of the neural network are the learnable weights and biases, which are determined in the training process. In contrast, the hyperparameters are pre-defined settings that are not learned from the training data. These encompasses the number of hidden layers, neurons per layer and much more. To train a neural network, at least two settings may be defined. First, a loss function, which is a metric that measures the error between the training data and the model's prediction. Second, an optimizer, which modifies the model's weights and biases during the training process to minimize the loss function. Each optimizer has its own set of hyperparameters.

The training of the annotation-detection neural network and of the view-splitting neural network may comprise forming a training dataset for view-splitting training and annotation-detection training. Alternatively, the training of these neural networks may comprise retrieving the training dataset, for example from a (*e.g.* distant) memory or server or database where it has been stored further to its creation. The training dataset comprises training examples. Each training example comprises a technical drawing with view labels for each view in the technical drawing and annotation labels for each technical annotation in the drawing. Each training example may for example comprise, for each view in the technical drawing, the coordinates of a bounding box around the view (*e.g*. 2D coordinates of the center bounding box dimensions) and a label indicating the classification of the view into one of the semantic classes previously discussed: main view, isometric view, section, title block, and other. Each training example may further comprise, for each annotation in the technical drawing, the coordinates of a bounding box around the annotation (*e.g*. 2D coordinates of the center and bounding box dimensions) and a label indicating the classification of the annotation into one of the semantic classes previously discussed: text dimension, text other, and symbol. Each training example may optionally comprise a visual rendering of the bounding boxes, in cases where this is to be outputted by the neural networks as previously discussed. For each training example, its technical drawing is the input (*i.e*. to be inputted to the corresponding neural network) and the labels form the output (*i.e*. the ground truth to which the prediction of the corresponding neural network must tend). The visual rendering is also part of the output.

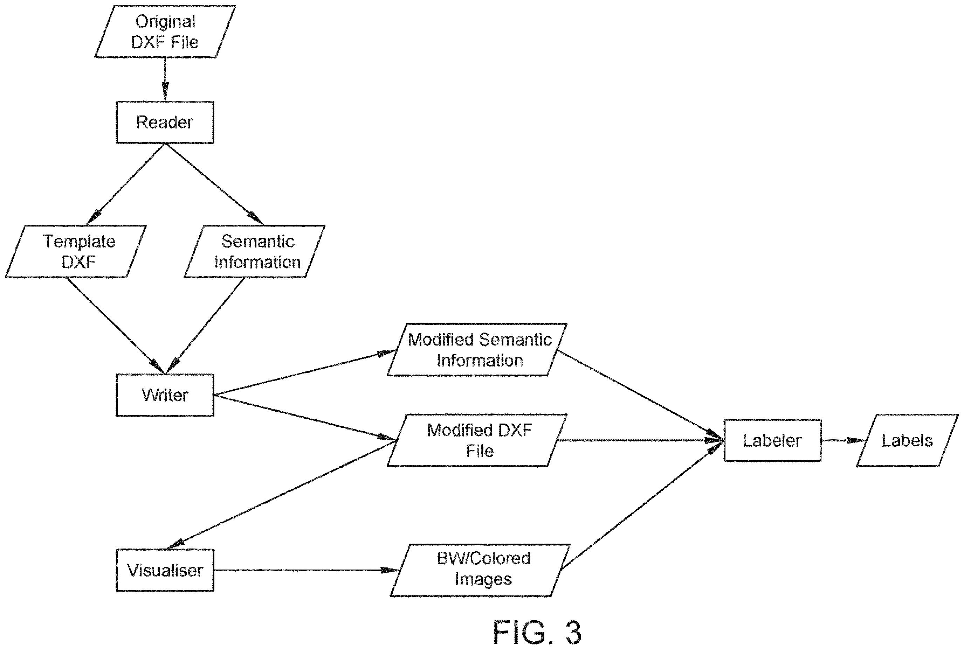

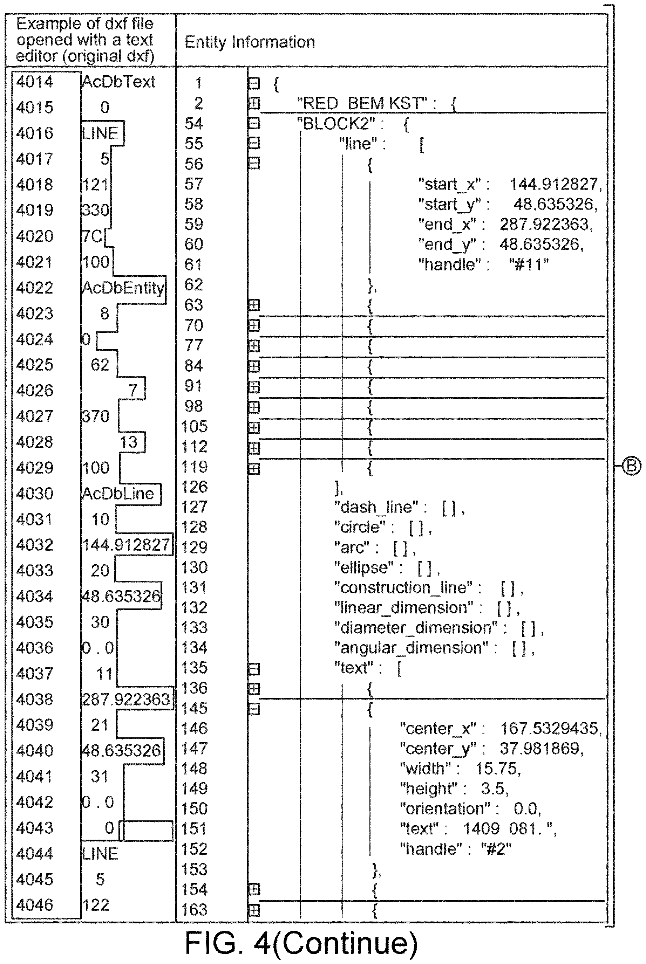

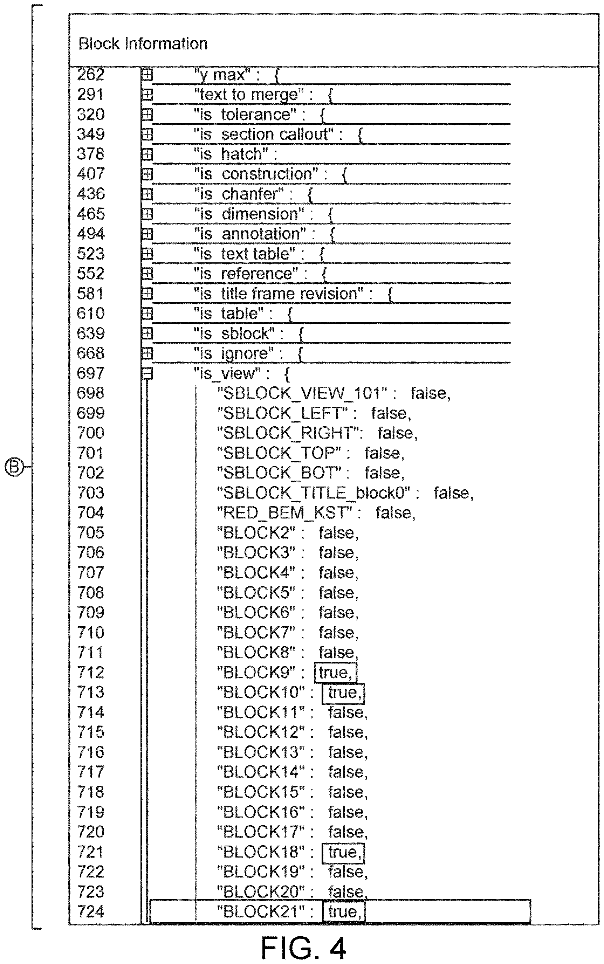

Forming the training dataset may comprise, for each training example, forming the training example by determining the labels from a DXF file of a technical drawing. The method may comprise for that providing the DXF file of the technical drawing and applying an algorithm to extract the labels from the DXF file. FIG. 3 shows a flowchart of the algorithm. The algorithm may be implemented in python, based on the package ezdxf. The algorithm allows to generate more than 2000 random labeled technical drawings from 700 DXF templates. A DXF is a file that contains vectorized picture data such as the precise coordinates of each point, line, text and other geometries of the technical drawing. However, because the structure of the DXF file is not necessarily consistent, it may not be immediate to extract the wanted information and regroup primitive elements together as blocks in a more semantic data. FIG. 4 shows an example of a dxf file with extracted entity and block information.

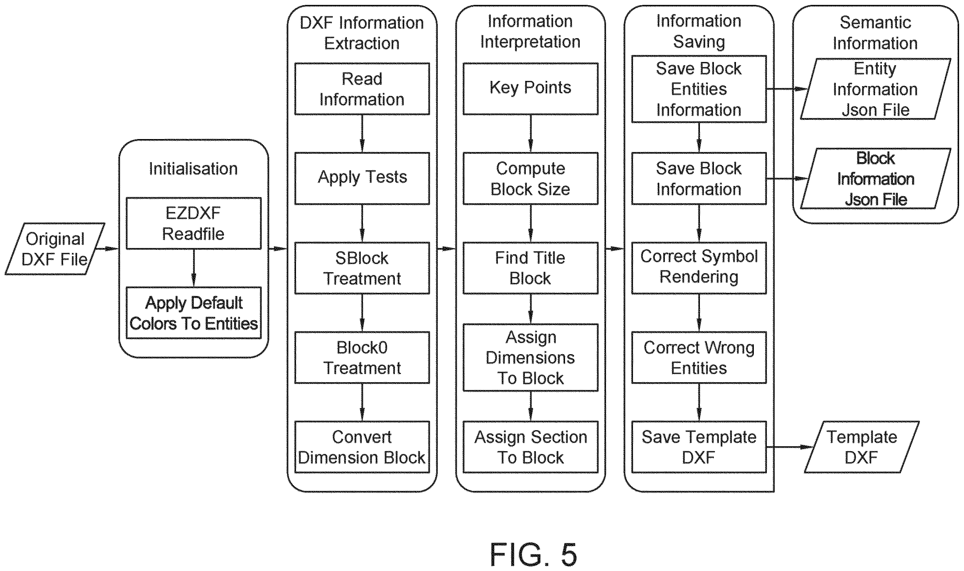

As illustrated on the flowchart of FIG. 3, the algorithm comprises a first block which is a reader block. This block implements a reader algorithm. FIG. 5 shows a flowchart of the reader algorithm. As can be seen on FIG. 5, the Reader algorithm takes as input the original DXF file and returns two json files with semantic information (entity information and block information) and a template version of the original DXF with no dimensions on it and default colors for all entities.

The reader algorithm first comprises an initialization. The initialization comprises reading the DXF with the function of the package ezdxf readfile and extracting all the content in a variable. The initialization also comprises assigning and applying default colors to the entities of the drawings depending on the entity type (for example, Text = Magenta, Lines = Green, Dashed Lines = Teal).

The algorithm then comprises a step of content/information extraction, as shown on FIG. 5. The content extraction process may be quite heavy as the expected information differs for every entity (LINE, TEXT, MTEXT, ELLIPSE, ARC, DIMENSION) and some even have sub-types. The algorithm may only look at INSERT entities. An INSERT entity is a block containing other entities and sometimes even another INSERT. For each such block the algorithm applies a series of tests to determine what it most probably represents depending on the entities inside it. A test returns either True or False. The tests may be the following:
1. Hatch test: False if contains anything else than line entities. Compute all line angles and group them. If more than 70% of lines share the same angle, return True.
2. Construction test: False if contains anything else than dashed lines or arcs and no more than 2 lines and 1 arc. If only 1 line, returns True. If 2 lines, returns true only if they are perpendicular.
3. Reference test: True only if contains 1 text of a length of 1 letter in uppercase and a small number of lines (either lines or polylines or solid). Returns false if contains any other type of entities.
4. Annotation test: True only if contains text with more than 2 characters and some polylines.
5. Table test: False if anything else than lines or text. All lines must be either vertical or horizontal and more than 3 lines must share the same length.

The information extraction step then comprises a SBlock treatment step. When generating the DXF files from the numerical drawings, some elements may be manually grouped into layers. If such layers exist, the entities are grouped in that step by the algorithm into what SBlocks. These SBlocks are specific for complex annexes present on the drawing.

The information extraction step then comprises a block0 treatment step. Many entities (such as some dimensions) are not contained into any block, so the algorithm groups them in that step in a fictive block called block0.

The information extraction step then comprises a dimension Block conversion step. In that step, some dimensions, such as cumulative dimensions, are generated directly as independent blocks with their extension lines, dimension line, arrows and text all disconnected. The algorithm isolates and converts them into standard dimension entity.

As shown in FIG. 5, the next step of the reader algorithm is to interpret the extracted information. This step first comprises the identification of key points. Dimension entities contain key points positioned near the geometry they constrain. Then for each block the algorithm loops through all its entities and updates the block bounding box. If an entity defining point (line extremity, circle center) is near a dimension key point, this key point is saved in the block as future reference for random dimension generation (but the dimension is not immediately assigned to this block). These key points are approximation and most of the time not enough to clearly say if a dimension is part of the block or not. Then the algorithm computes the block size which is a score associated to the block depending on its global content. A higher score is associated to blocks that probably represent view geometry, filtering out isometric views, annotations, tolerances and construction elements. Score = number of key points + number of line (in the limit of 10) + number of circles * 3 + number of arc (in the limit of 10) + number of linear dimension*20 + number of diameter dimension * 20 + number of angular dimension * 20 - number of text * 5 - number of solid - number of ellipse. Note that most of the time the block does not contain any dimension entity. Isometric views are mostly composed of ellipse entities. Annotations and tolerances contain text. Construction elements are dashed lines so they do not increase or decrease the score. Knowing the block limits, the algorithms test if this block could be the Title Block of the drawing. Most of the time the Title Block is exported in a separate INSERT entity, but sometimes its elements are dispersed in the block0. In such case the algorithm reconstructs the Title Block based on key words, text density and table search.

Because dimensions are not directly part of a block, the algorithm recreates this link to correctly randomly generate dimensions in the Writer algorithm (and not create dimensions in an isometric view that is close). The link is established using the block size score and block area limits. Blocks are sorted by size score then if a dimension key point is inside the block area, the dimension is associated to this block and the block is definitely considered as view geometry. Section texts are often isolated in the block0 which leads to section bounding box not including their text (for example "Section A-A"). The algorithm recreates this link by finding a block with hatch patterns near the section text and that matches the section callout size and assigning the section to this block.

The reader algorithm then comprises a step of saving information (*i.e*. saving the information extracted and interpreted), as shown in FIG. 5. To save information, the algorithm structures it in a dictionary and save it in a json file. Then the algorithm produces a template dxf. Tolerance symbols usually do not render correctly in images generated from DXF files using the ezdxf package. To counter the problem, the algorithm adds small lines on top of the symbol to visually reconstruct it. The algorithm removes blocks and entities that have impossible coordinates close to infinity. Then the algorithm saves the dxf without dimension entities as a template dxf for coming random dimension generation by the Writer algorithm.

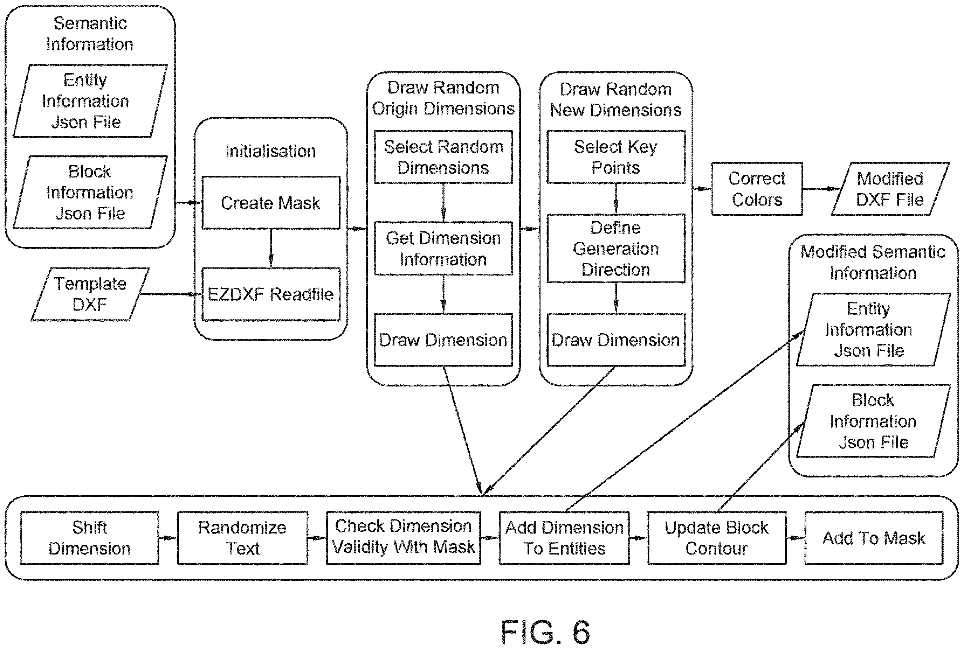

As shown in FIG. 3, the algorithm then comprises a Writer algorithm, applied to the output of the Reader algorithm. FIG. 6 shows a flowchart of the Writer algorithm.

The Writer algorithm takes as input the saved semantic information in the json files and the template dxf file in order to output a modified dxf file with random dimensions positioned around the geometry and updated semantic information json files. From the semantic information the algorithm creates masks that tell where there is space to generate new dimensions.

Then the algorithm selects a predetermined number of random dimensions from the original ones. The dimension information was saved in the entity information json file. To draw the dimension there are several steps. First, the algorithm randomly shifts the main dimension line position, then randomizes the text position, orientation and value if possible. The algorithm tests if the new dimension fits into the mask. If yes, the algorithm adds it to the dxf, updates the block contour based on the dimension extremities, and adds it to the mask.

To draw new random dimensions, the algorithm uses as anchor the key points defined in the block information json file. From these key points the algorithm determines the best direction for the dimension so that the extension lines do not cross the entire view, overlapping too many objects. The algorithm draws the dimension following the same process as origin dimensions.

The final step of the writer algorithm consists in correcting the colors of the arrows, extension lines and dimension lines newly generated.

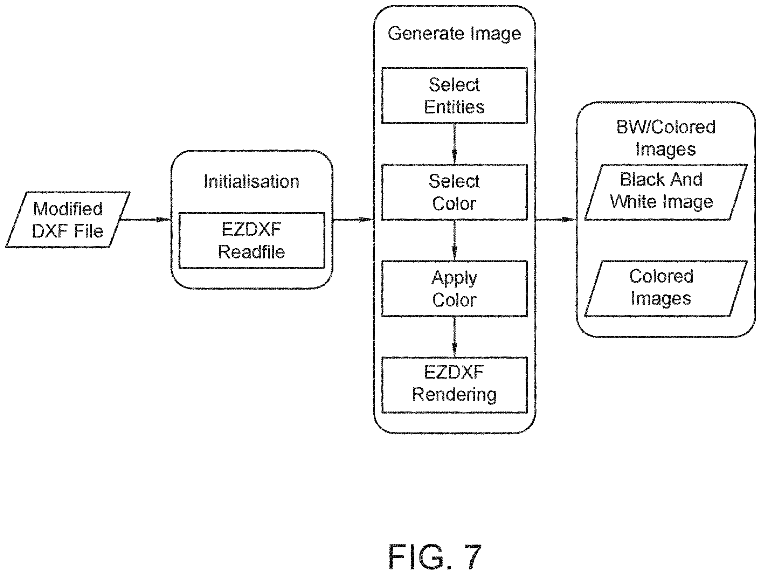

As shown on the flowchart of FIG. 3, the algorithm also comprises a visualizer algorithm. FIG. 7 shows a flowchart of the visualizer algorithm.

The Visualizer algorithm takes as input the modified dxf and outputs a black and white image and colored versions of the same image. Because the modified dxf was colored, the algorithm duplicates it and generate a black and white version. The algorithm creates a colored dxf for each semantic class to detect: for example, on the colored dxf for this semantic class, the elements of the class are green and the others are red. Thus, using 1 modified dxf, the algorithm obtains 1 black and white dxf and 8 green and red dxf. The rendering is done using ezdxf package function.

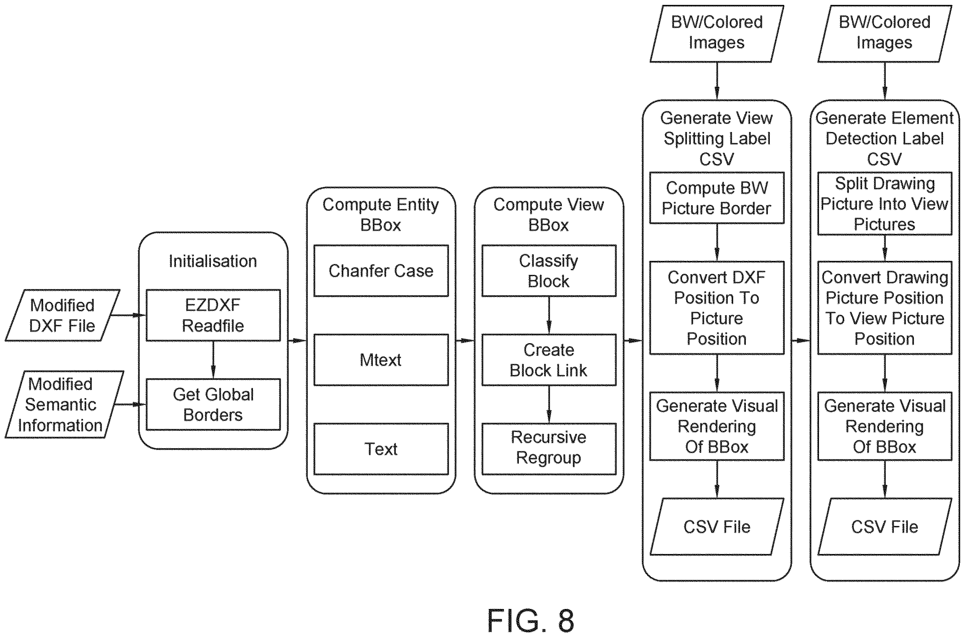

As shown on the flowchart of FIG. 3, the algorithm also comprises a labeler algorithm. FIG. 8 shows a flowchart of the labeler algorithm.

The labeler algorithm takes as input the modified dxf, the modified semantic information json files and all the generated images. It outputs the csv files to train the View Splitting and Annotation Detection neural networks. Indirectly, it also produces focused images on the view. The algorithm starts by getting the global borders. The global border is the border of a frame (surrounding a view and/or annotation(s), or the whole drawing). The frame borders may be used latter to convert dxf coordinates into the picture pixel coordinates. The frames include a main frame or outer frame which is the global frame of the whole drawing, and may be always comprises by any drawing herein.

For each annotation to be detected with the annotation detection neural network, the algorithm computes its bounding box. Chamfers may create problems as they are not directly saved as dimensions but into their own specific block with every text considered separately. To solve this, the algorithm merges them into a single dimension text. MTEXT is the default type for dimension texts in the dxf file. Other texts are of type TEXT.

A view can be composed of multiple blocks because it has a geometry, tolerances, patterns, etc. To merge blocks into either Views, Sections, Isometric Views, Title Block or Other (the View Splitting classes), the algorithm applies a first approximate classification of the block based on their test results saved in the block information json file. Then based on this classification and the block borders, the algorithm establishes links between blocks, linking small block representing tolerances to bigger blocks with dimensions that are geometry of the view. Then the algorithm recursively merges the blocks together, recreating views and obtaining borders from the block borders.

On the black and white picture of the drawing, the algorithm finds the frame borders by considering the outside black pixels that form a rectangle. Now that the pixel position of the frame and its position in the dxf file coordinate system are precisely known the algorithm may translate between the two. All entity bounding boxes computed using the dxf coordinates are projected in the picture coordinate system and saved in a csv. The algorithm also generates a picture with the computed bounding boxes showed clearly in order to validate the data generation.

To generate data for the Element Detection, the algorithm starts from the black and white and colored images and crops them based on the view bounding boxes computes for the View Splitting. Then all the element bounding boxes are projected on these view pictures.

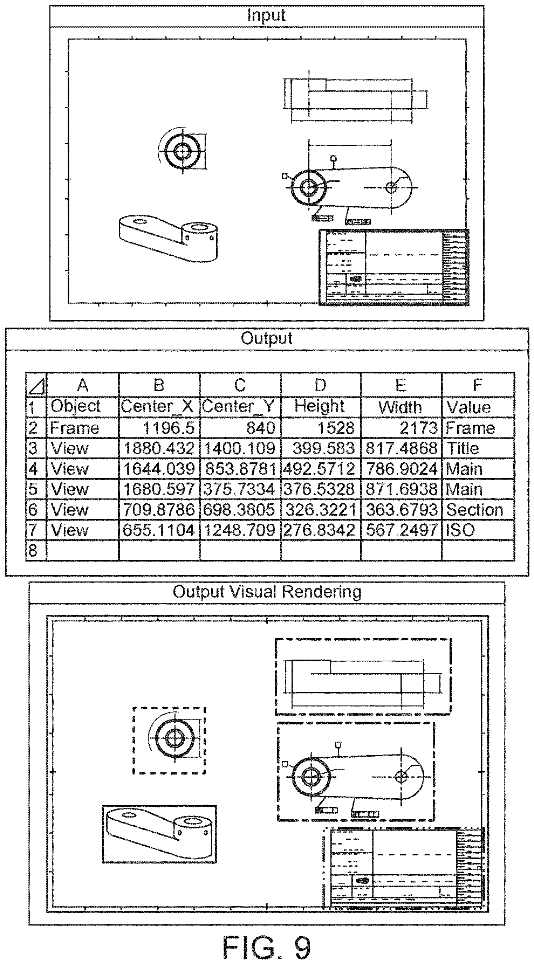

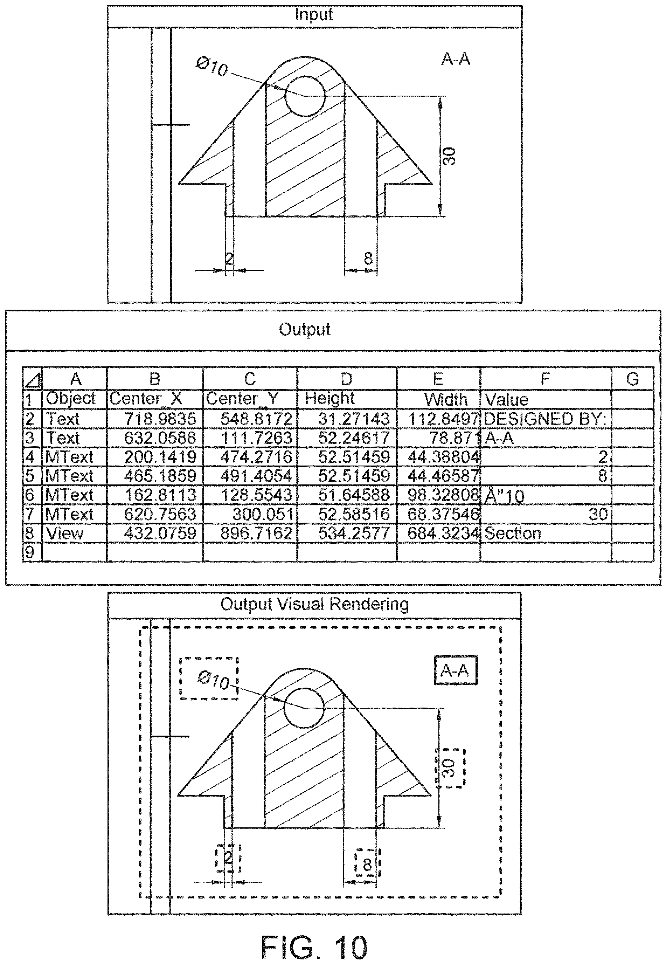

FIG. 9 shows an example of a training example for training the view-splitting neural network obtained with the above algorithm. FIG. 10 shows an example of a training example for training the annotation-detection neural network obtained with the above algorithm.

Implementations of the learning of the view-splitting module are now discussed. As previously outlined, the task of the view splitting neural network is to detect all the views, title block, and table of interest on the drawing. There are many neural network models usable for such a task. In implementations, the view-splitting neural network may be a Faster-RCNN model, a deep convolution neural network. It works in two steps: a region proposal, then a classifier. The region proposal task is to quickly detect region of interest that most probably contain objects. Then the classifier focuses on the proposed region to analyze more deeply the image. Both use convolution neural network to learn patterns and features from an image. In implementations, the number of drawing images used for training comprise about 2100 (obtained by synthetic generation). The images are separated in training (70%), validation (15%), and test (15%). Each time an image is called as input, the method may apply some data augmentation transformation: blur, gaussian noise, random crop, random 90° rotate, color jitter. Images are resized to a shape of (800, 800) then standardized using a mean of 0.9077 and a standard deviation of 0.1827 (mean and deviation of the dataset). They are then grouped by batchs of 48 images. The model is trained for 100 epochs and a One Cycle learning rate scheduler is sued (warmup strategy during the 10 first epochs and sinusoidal decrease after) with a learning rate of 10^(-4). The optimizer used for the gradient descent is Adam optimizer. Two losses are minimized during the training: a Smooth L1-Loss (L1Loss - PyTorch 2.2 documentation) for the regressors and a Cross-Entropy loss (CrossEntropyLoss - PyTorch 2.2 documentation) for the classification.

Training results of these implementations are shown in the two below tables. All the elements are detected, and ones with large text annotation and tables are either ignored or classified independently as the fifth class (Other in dark teal). The title block is found in teal, sections in green, main views in blue and isometric views in dark blue.

The metrics used to measure the performance of the model are:
- Mean Average Precision (MAP): measures how accurate are the predictions. We subdivide it in different sub metrics: MAP 50, MAP 75, MAP Large, MAP Medium which measures respectively the MAPs for objects with an Intersection over Union (IoU) of 50 and 75% with the true area and Large and medium areas. The results are 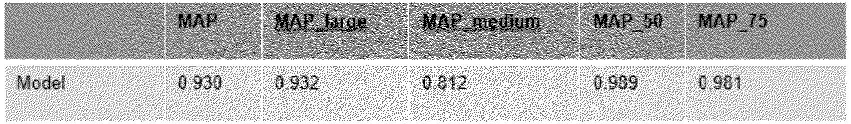
- Mean Average Recall (MAR): measures how good the model finds all positives. We subdivide it in MAR 1, MAR 10, MAR 100, MAR Large and MAR Medium which gives respectively the mean average recall given 1, 10 and 100 detections per image and mean average precision for large and medium objects. The results are:

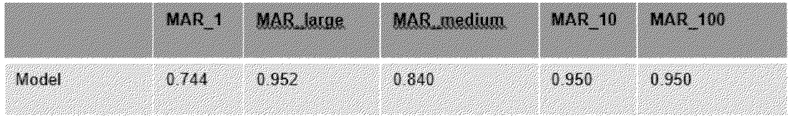

FIG.s 13 shows an example of a view detection achieved according to the above implementations.

Implementations of the training of the annotation-detection neural network are now discussed. The task of this neural network is to detect all the textual information classified as Dimension Text, Other kind of Text, and Symbols. The Faster-RCNN model architecture is also used for this neural network but specialized in this task. Each synthetic drawing contains several views making many more input images for the Element Detection model. The images are separated in training (90%), validation (5%), and test (5%). Each time an image is called as input, the method applies some data augmentation transformation: blur, gaussian noise, random crop, random 90° rotate, color jitter. Images are resized to a shape of (800, 800) then standardized using a mean of 0.958 and a standard deviation of 0.174 (mean and deviation of the dataset). They are then grouped by batches of 48 images. The model is trained for 100 epochs and a One Cycle learning rate scheduler is used (warmup strategy during the 10 first epochs and sinusoidal decrease after) with a learning rate of 10^(-3). The optimizer used for the gradient descent is Adam optimizer. Two losses are minimized during the training: a Smooth L1-Loss for the regressors and a Cross-Entropy loss for the classification.

Training results of these implementations are shown in the two below tables.

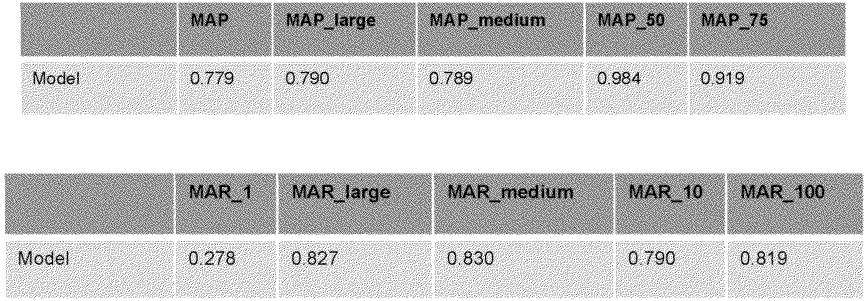

Still referring to the flowchart of FIG. 2, the method further comprises, for each identified technical annotation, identifying S30 characters (*i.e*. letters, numbers and/or symbols) in the technical annotation. This is done by applying a text-recognition module configured for identifying characters in a technical annotation. The text-recognition module may be configured for, given an input technical annotation, detecting an orientation of the technical annotation and making the technical annotation horizontal (if the detected orientation is not already horizontal), and then recognizing characters in the technical annotation. The text-recognition module may be further configured for, if the input technical annotation comprises a tolerance top and/or a tolerance bottom, grouping the recognized characters into three groups consisting of: technical annotation text, top tolerance, and bottom tolerance.

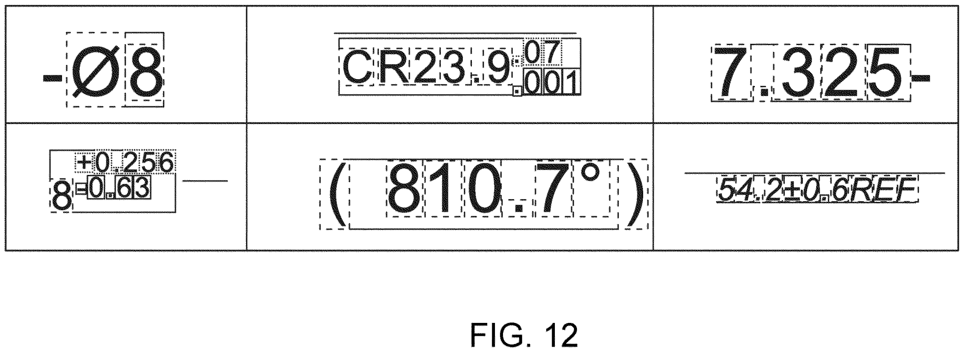

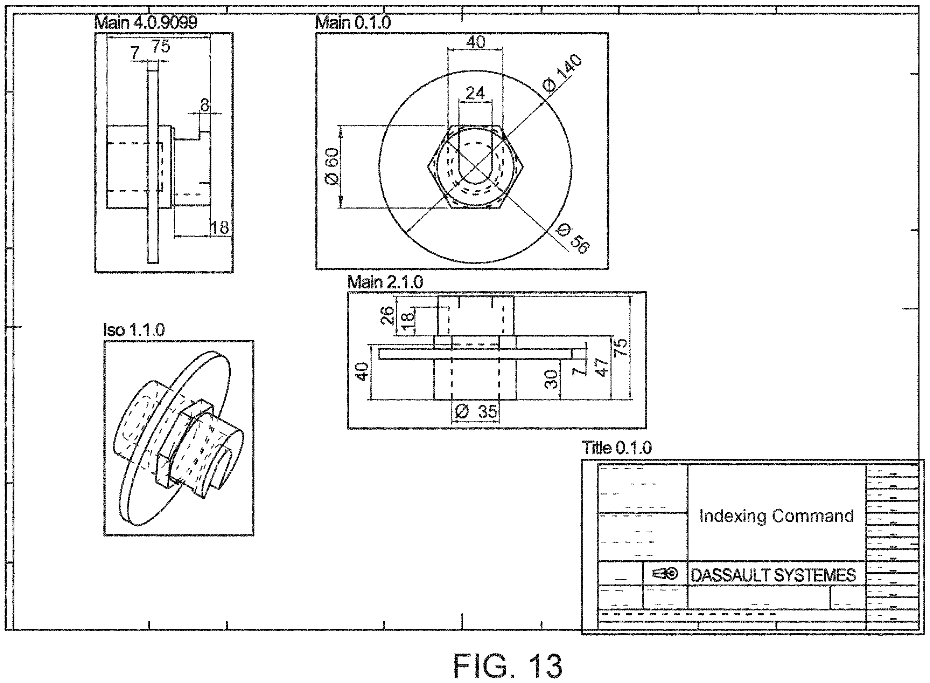

The text-recognition module may comprise a neural network also referred to as "text-recognition neural network". This neural network may perform the text-recognition part of the text-recognition module, the detection of the orientation and the making of the annotation horizontal being performed by deterministic functions or algorithms. The method may comprise, *e.g.* in the offline stage, training the text-recognition neural network. This may include forming a training dataset for text-recognition. This may consist in generating synthetic text images that are visually close to real technical annotations, the training dataset consisting in these synthetic text images. The method may for that apply a text generator, allowing to generate hundreds of thousands of text images in minutes. This generator cover all letters a-z and A-Z, all numbers 0-9, the punctuation: %()*+°,-./:[]<>, and the math symbols : \u00D8 (diameter ø), \u00B1 (plus-minus ±) and \u007C (vertical bar | ). On a blank picture the generator writes a random text. It is either a word from a word dictionary composed of common drawing vocabulary or a dimension text. The dimension text is composed of a prefix, a main dimension, a tolerance, and a suffix. The prefix and suffix can be mathematic symbols or words. The main dimension is a random number with possibly a dot. The tolerance can be either horizontal using the plus-minus sign or vertical. FIG. 12 illustrate training data for text recognition.

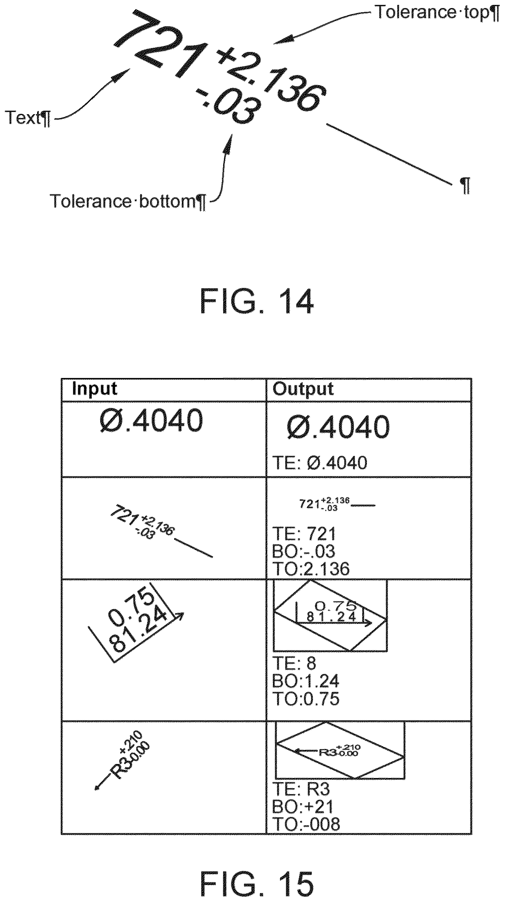

Implementations of the text recognition module are now discussed. Its task is to recognize characters from texts detected in the Element Detection task then to create readable texts, top tolerance and bottom tolerances from these characters depending on their position in the image. The module combines different architectures and components:
- First, to detect the text orientation by finding the oriented boxes around texts, the Pytorch implementation of the Character-Region Awareness For Text detection (CRAFT) model;
- Knowing the text orientation, an algorithm that makes the text horizontal;
- the Faster-RCNN model architecture for the text recognition neural network to recognize characters;
- an algorithm to group characters as texts, top tolerances or bottom tolerances depending on their position on the image. This is illustrated by FIG. 14.

In these implementations, the training dataset for text recognition is composed of 50000 generated texts with or without tolerances. The range of characters goes from the alphabet (lower and upper cases) and numbers to special characters such as '±', 'Ø', '°' and the different operation signs and brackets. The images are separated in training (90%), validation (5%), and test (5%). Each time an image is called as input, the method applies some data augmentation transformation: blur, gaussian noise, padding, random brightness and contrast modification, low angle rotation, color jitter.

In these implementations, the method considers 83 classes, each class per character possibility : ", '%', '(', ')', '*', '+', ',', '-', '.', '/', '0', '1', '2', '3', '4', '5', '6', '7', '8', '9', ':', '<', '>', 'A', 'B', 'C', 'D', 'E', 'F', 'G', 'H', 'I', 'J', 'K', 'L', 'M', 'N', 'O', 'P', 'Q', 'R', 'S', 'T', 'U', 'V', 'W', 'X', 'Y', 'Z', '[', ']', '^', 'a', 'b', 'c', 'd', 'e', 'f', 'g', 'h', 'i', 'j', 'k', 'l', 'm', 'n', 'o', 'p', 'q', 'r', 's', 't', 'u', 'v', 'w', 'x', 'y', 'z', '|', '°', '±', '×', 'Ø'. Images are resized to a shape of (156, 96) then standardized using a mean of 0.902 and a standard deviation of 0.197 (mean and deviation of the dataset). They are then grouped by batchs of 32 images. The model is trained for 30 epochs and we use a Step learning rate scheduler (which divides the learning rate by 10 for each 10 epochs) with a learning rate of 10⁻⁴. The optimizer used for the gradient descent is Adam optimizer. Two losses are minimized during the training: a Smooth L1-Loss for the regressors and a Cross-Entropy loss for the classification.

The different metrics used to measure the performance of the text-recognition model in these implementations are: MAP, MAR, Word Accuracy (which measures the number of texts correctly predicted) and Character Accuracy (which measures the number of characters in texts which are correctly predicted). The results are as follows:

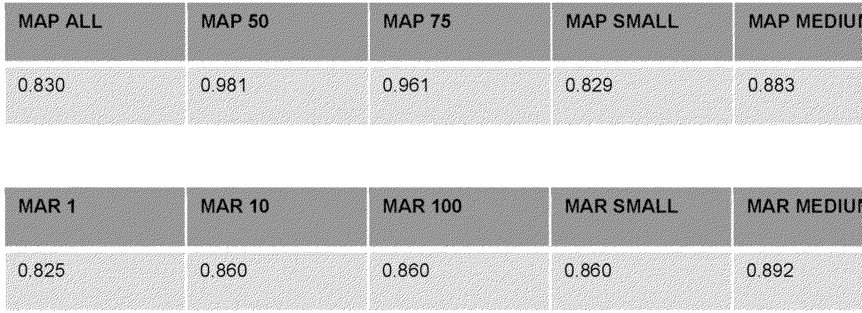

Accuracies when images are not rotated:

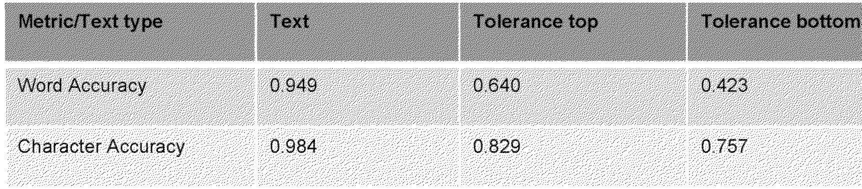

Accuracies when images are rotated and angles corrected after:

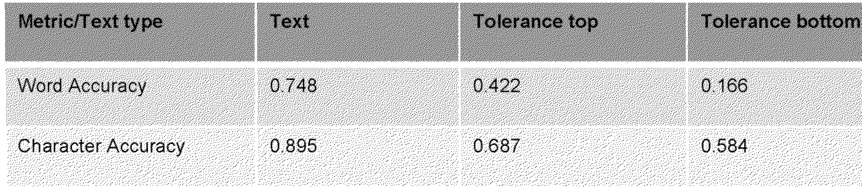

FIG. 15 illustrate inputs and outputs of the text recognition module.

The method further comprises, for each identified view, determining S40 a graph representation of the view. This is done by applying a graph module configured for determination of a graph representation of the view. The graph representation comprises nodes and edges. Each node corresponds to a classification of one or more pixels in the view into a semantic class of a predetermined set of semantic classes. Each edge connects two nodes either if the two nodes represent neighboring pixels or if the two nodes represent pixels distant from each other below a predetermined threshold. The set of semantic classes includes at least the semantic classes geometry, dimension and dimension-related symbol. The method further comprises, for each identified view, using the graph topology and the identified characters to associate S50 nodes corresponding to the dimension-related symbol or dimension classes to nodes corresponding to the geometry class. Using the graph topology and the identified characters to perform this association S50 may comprise any identification, based on the nodes classification and the graph topology, of the geometries and technical annotations in the view (which are each formed by one or more nodes having a same classification and an appropriate connection and/or proximity in the graph), on correspondences between geometries and annotations, and making the associations according to these correspondences.

It is also proposed the following method for processing a graph representing an image of a technical drawing comprising at least one view and at least one technical annotation, the method being referred to as the "graph method". Steps S40 and S50 may in fact consist in applying the graph method to each view identified at S10.

The graph method is a computer-implemented method for processing a graph. The graph represents an image of a technical drawing. The technical drawing comprises at least one view and at least one technical annotation. For each view of the at least one view, the graph method comprises providing the graph. The graph comprises nodes and edges. Each node corresponds to a classification of one or more pixels in the view into a semantic class of a predetermined set of semantic classes. In other words, each node represents a set of one or more pixels, and comprises a classification (*e.g*. a label) of this set in one of the semantic classes. This means that the set represent at least a part of a geometry, a dimension, or a dimension-related symbol. Each edge connects two nodes either if the two nodes represent neighboring pixels (*e.g*. pixelwise connected pixels) or if the two nodes represent pixels distant from each other below a predetermined threshold. The set of semantic classes include at least the following classes: geometry, dimension, dimension-related symbol. The graph method further comprises clustering, based on the graph topology: nodes corresponding to the geometry class, to reconstruct the geometries in the at least one view; and nodes corresponding to the dimension and dimension-related symbol classes, to reconstruct the technical annotations of the at least one view. The graph method further comprises associating reconstructed technical annotations to reconstructed geometries based on a detected position of the technical annotations and based on the graph topology.

The graph method is a method for processing a graph representing an image of a technical drawing comprising at least one view and at least one technical annotation. In specific, the graph method processes each view of the at least one view (*i.e*. the steps of the method are applied to each view of the at least one view), for which it provides the graph, and performs the clustering and associating steps. The method thus processes the graph so as to obtain, based on this graph, a reconstruction of the geometries and annotations in the view, and technical links between these reconstructed annotations and geometries. The graph method may take as input a processed numerical drawing resulting from step S10-S20-S30 of the reconstruction method, that is with all the views, annotations and characters identified, and optionally color assigned to pixels (for subsequence assignment of colors to the nodes as further discussed hereinafter).

The correspondences and links between S40-S50 and the graph are as follows:
- the graph method is applied for each view (which is thus "the view" referred to in the graph method), each application of the providing step of the graph method for this view corresponding to step S40 and each application of the clustering step and associating steps corresponding to an implementation of step S50 (in other words for each identified view, in the reconstruction method, using the graph topology and the identified characters to associate S50 nodes corresponding to the dimension-related or dimension classes to nodes corresponding to the geometry class may comprise the execution of these clustering and associating steps);
- the determination S40 of the graph representation of the view by applying the graph module is the providing of the graph for this view according to the graph method, this providing being thus performed by the graph module (which may thus comprise the graph neural network discussed hereinafter); and
- the identified characters (identified at S30) and the identified technical annotations of S20 comprise data (*e.g*. the previously-discussed bounding boxes data) forming the "detected positions" of the technical annotations used for the associating step in the graph method.

The graph method comprises providing the graph (*i.e*. of the view of numerical drawing considered). Providing the graph may comprise retrieving the graph, from a (*e.g*. distant) memory or server or database where the graph has been stored further to its creation. Providing the graph may alternatively comprise constructing/determining the graph based on the considered view. Providing the graph may comprise building the graph topology (*i.e*. the nodes and edges) and then determining the classification of the nodes.

Providing the graph may comprise determining a skeleton of the view by making lines in the technical drawing having a thickness smaller than a predefined threshold. This step may also be referred to as "skeletonization" and is a first step of the construction of the graph topology. Skeletonization thus consist in the application of matrices that perform operations to trim the borders of the lines of the drawings until obtaining lines having a thickness smaller than the predefined threshold (*e.g*. 1 pixel thick).. The lines are formed by the pixels of the view that represent each a portion of a technical information (geometry or annotation), *i.e.* the pixels other than those of the empty parts of the view. Making lines in the view having a thickness smaller than a predefined threshold may consist in making the lines 1 pixel thick

The skeletonization may be preceded by a step of performing a binarization where an adaptive threshold compares the value of each pixel to its surrounding area. Depending on the difference value, the pixel is considered True or False. The result is a binarized version of the image with a clear difference between the background (false) and the view lines (true). The view picture may be noisy, and this binarization allows to discard the pixels corresponding to noise (*e.g*. outliers). The skeletonization may then consist in making every line 1 pixel thick. There are multiple skeletonization algorithms but Zhang method from the skimage.morphology.skeletonize package may be used as it showed the best approximation in the context of the present disclosure and is also fast enough to get a skeleton in the order of 0.1 second. Because the skeleton removes information about the line thickness, the method may comprise storing data describing the previous thickness in parallel for later use as a node feature. The local line thickness may be computed by comparing the skeleton to the original image. The method may further comprise removing isolated pixels from the skeleton as they may be due to noise.

Providing the graph may then further comprise determining traces of the skeleton. Each trace is a line (straight or curved) ending at junction points. A junction point is a pixel of the skeleton having at least three neighbors in the skeleton. The method identifies these junction points and then the traces (which are lines of the skeleton ending at identified junction points). A pixel has either:
- 1 neighbor if it is the start or end of a line,
- 2 neighbors if it is the continuity of a line,
- 3 or more neighbors if it is a junction point.

Some pixels may be removed at junction points, for example:

| | | | | |
|---|---|---|---|---|
| 0 | 0 | 1 | 0 | 0 |
| 0 | 0 | 1 | 0 | 0 |
| 1 | 1 | p | 1 | 1 |

In the above example 1 are line pixels and 0 background pixels. p is the pixel at the center of the junction. p has 3 neighbors, but so does p neighbors (diagonal neighbors are included). Thus, stopping a trace at the first pixel with 3 or more neighbors may exclude some pixels (here p would not belong to any trace). To counter this, the next pixel is kept in the trace by the method if its direction is the same as the previous pixel to privilege straight lines. Keeping p is very important when computing connection edges in the future graph. Here is another example where removing pixels named p would delete trace connections:

| | | | | | | |
|---|---|---|---|---|---|---|
| 0 | 0 | 0 | 1 | 0 | 0 | 0 |
| 0 | 0 | 0 | 1 | 0 | 0 | 0 |
| 1 | 1 | p | p | p | 1 | 1 |
| 0 | 0 | 1 | 0 | 1 | 0 | 0 |
| 0 | 0 | 1 | 0 | 1 | 0 | 0 |

Providing the graph may then further comprise defining each graph node as representing a respective trace. In other words, each graph node represents the respective set of pixels that form a respective trace.

The graph method may optionally perform a trace processing, *i.e.* a post-processing of the determined traces. This may include split traces at sharp angles. For that the method may the Douglas Peucker algorithm that at the same time makes the traces smooth and simplifies them in a couple of key points forming segments. This process is advantageous because it made the computation of node features (discuss hereinafter) much easier. However, it may add many small nodes for texts and arcs because traces would split in small segments. As such, this step may be performed to compute node features but not to compute the traces or to define the nodes of the graph.

The providing of the graph may further comprise computing node features. Each node may comprise or be associated to one or more node features, a node feature being data describing a property of the pixels represented by the node. The node features used in the present disclosure may consist in the following set (*i.e*. each node may comprise one or any combination of the following features, for example all of them):
- The mean position of the trace pixels (minimum required);
- Number of segments obtained from the Douglas Peucker Algorithm;
- The mean, max, min and variance of the segment size;
- The mean, max, min and variance of the angle cos between each pair of segments;
- A test to know if the trace is an arc. If it is, the radius and center location;
- The length and thickness in pixel of the trace;
- The orientation of the trace with Boolean for common orientations (0, 90, 30, 45, 60);
- If a trace goes through an arc center (for construction lines);
- If a trace is exactly between two other traces and with the same direction (symmetry);
- If several traces are aligned and at the same distance interval (for hatches).

The providing of the graph may further comprise computing graph features (*i.e*. features of the graph), which may comprise one or any combination of the following features, for example all of them:
- If the view overlaps another view (left, right, top, bottom),
- If the view overlaps the frame overlap (left, right, top, bottom),
- If the view is a section.

The overlapping test may help the model because if there is overlap with the frame, a table-like shape will likely appear near the border of the view picture. Same with the view overlap, some dimensions and text are more likely to be present and will be disconnected from the center geometry shape. The section test looks out for hatches.

The providing of the graph may further comprise defining the edges of the graph by defining first edges and second edges. Each first edge is an edge connecting two nodes if the two traces represented by the two nodes are pixelwise connected, *i.e*. when the two traces are pixel to pixel connected (which means that every curve split at junction points creates multiple traces connected together by edges). Because of the skeleton processing, a distance of 2 pixels is considered to still create a pixelwise connection between two traces. Each second edge is an edge connecting two nodes if the two traces represented by the two nodes are not pixelwise connected but distant below a predefined number of pixels (*e.g*. 10 pixels). For identifying these second edges the method may not only search for this pixel proximity at the start and end point of the trace but also at the mid, first and third quarter of the trace depending on its pixel length for optimization purpose. These considered pixels are called the key pixels of the trace. They may be used several times during the graph processing (feature and labelling). Each first edge may be referred to as "a connection edge", and each second edge may be referred to as "a proximity edge". Each connection edge may be associated with a given color, *e.g.* green, in the graph. Each proximity edge may be associated with a another given color, *e.g.* orange, in the graph.

To limit the number of proximity edges for cluster of nodes (many nodes that are very close in pixel distance), the method may perform the following. Before adding a proximity edge, the method checks for the two nodes their graph neighbors. If they share a neighbor, it means that the 2 considered nodes are 2 edges away from one another. In that case the method does not add the proximity edge. This process takes into account the newly added proximity edges. As such the number of possible edges drastically decreases by sometimes a factor of 5 simplifying a lot the graph. When adding an edge, the method may also compute the angle between the 2 traces. The information is saved as an edge feature. The angle may be an approximation because some traces are not a straight line, so the angle is computed taking only the start and end points of both traces. The angle tells if the traces are perpendicular or parallel. It is useful either for the graph neural network (discussed hereinafter) or for step of numerical reconstruction of the drawing.

Providing the graph may further comprise applying a machine-learnt graph function (which may be a neural network, referred to as "the graph neural network) configured to label each node of the graph into a semantic class of the set of semantic classes. The sub-steps of the providing of the graph step until this further sub-step of applying the machine-learnt graph function may altogether be referred to as a step of segmentation called "segmentation step 2" (to distinguish from segmentation step 1 discussed hereinafter). As previously discussed, the set of semantic classes includes at least the following classes: geometry, dimension, dimension-related symbol. The set of semantic classes may consist in the following classes (*e.g*. each associated with a respective color in the graph): Geometry (*e.g*. associated with color green), Dimension Extension line (*e.g.* associated with color blue), Dimension Main line (*e.g.* associated with color red), Text (*e.g.* associated with color pink), Arrow (*e*.*g.* associated with color black), Construction line (*e.g*. associated with color teal), Section Callout (*e.g*. associated with color Grey), and Other (Tolerance, Frame, Table, Unknown) (*e.g*. associated with color yellow).

The method may further comprise, prior to providing the graph, machine-learning the graph function. This may include forming a training dataset for graph function learning, and then learning the graph function. Alternatively, the training dataset may be formed beforehand and only retrieved by the method from a (*e.g.* distant) memory or server or database where it has been stored further to its creation.

The training dataset comprises graphs each representing a respective view of a technical drawing, with nodes and edges as described above and classification of each node into one of the semantic classes of the predetermined set of semantic classes that includes geometry, dimension, dimension-related symbol. Forming the training dataset (whether the learning of the graph function comprises this step or not) may comprise providing these graphs and labelling them with the classification. Providing the graphs may comprise, for each graph, providing the graph by performing the "providing of the graph" step of the graph method described above (*i.e*. from an initial dataset of views of technical drawings, which may step from S10 previously discussed). In the step of computing the features, a data augmentation may be further performed. It may comprise one or any combination of the following data augmentation steps (applied to one or more already formed graphs):
- Rotating the graph by 90°,
- Flipping the graph,
- Removing some unimportant nodes (text, tolerance),
- Adding new unimportant nodes by coping existing ones,
- Removing/adding edges.

This data augmentation does not alter the coming labeling process as long as the initial node ordering is kept in memory because the new graph nodes share exactly the same labels. Note that most of the node features are invariant to typical data augmentation process like resize and rotation.

The labelling of each graph is now further discussed. This labelling is, for each graph, preceded by a step of segmentation called "segmentation step 1. This segmentation step is now discussed.

Segmentation step 1 is applied to each respective view (*e.g*. stemming from S10 as previously discussed) corresponding to a respective graph of the training dataset and uses the technical annotations in the view (for example as identified by S20 previously discussed). Segmentation step 1 may comprise the following steps:
- For each drawing image used for creating the training dataset (*i.e*. from which views corresponding to graphs of the dataset stem), obtaining a black and white image and a colored image (with the default dxf colors). This may be done by applying the previously-discussed visualizer algorithm;
- Using the bounding boxes of the views (*i.e*. stemming from S10) to cut the views;
- For each colored image, creating binary color (*e.g*. red and green) images by modifying the default dxf colors as follows: for each graph/view, for each semantic class involved in the view represented by the graph, a colored image is created where the pixels of this semantic class are assigned a given color (e.g. green) and the other pixels (i.e. non-background pixels) are of another given color (e.g. red);
- For each colored image, creating one new colored image by modifying the dxf default colors so that for each semantic class involved in the view represented by the graph, the pixels of this semantic lass are all assigned a respective color, the background pixels being kept in white/uncolored.

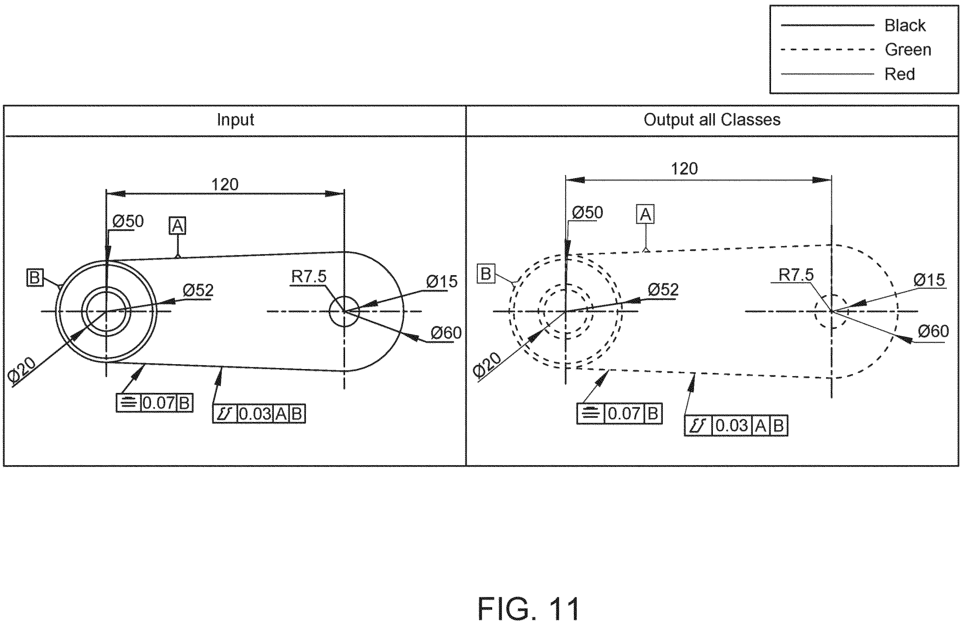

In other words, the input of segmentation step 1 may be the DXF of the drawings involved in the training dataset and the bounding boxes detected by S10, and its output are the black and white images, binary color images, and the new colored images discussed above. FIG. 11 shows an example of this first segmentation step.

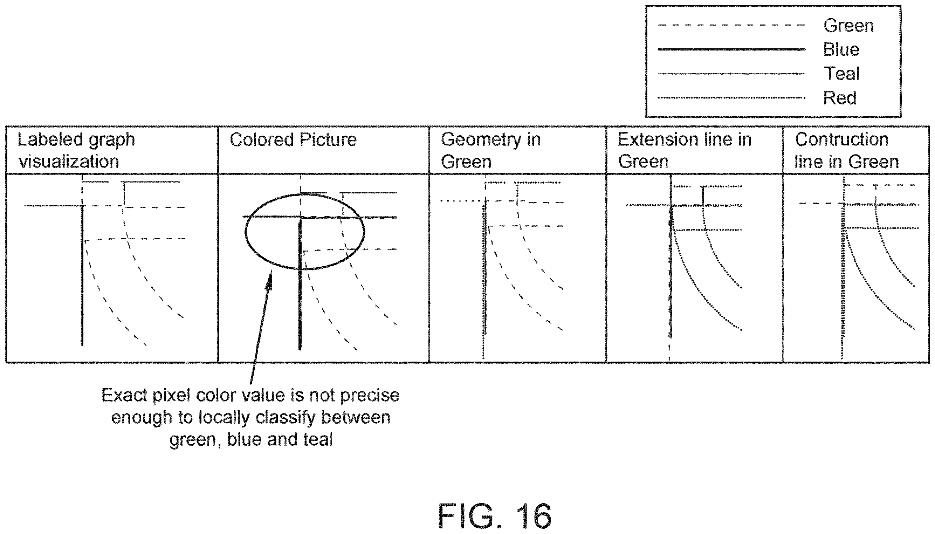

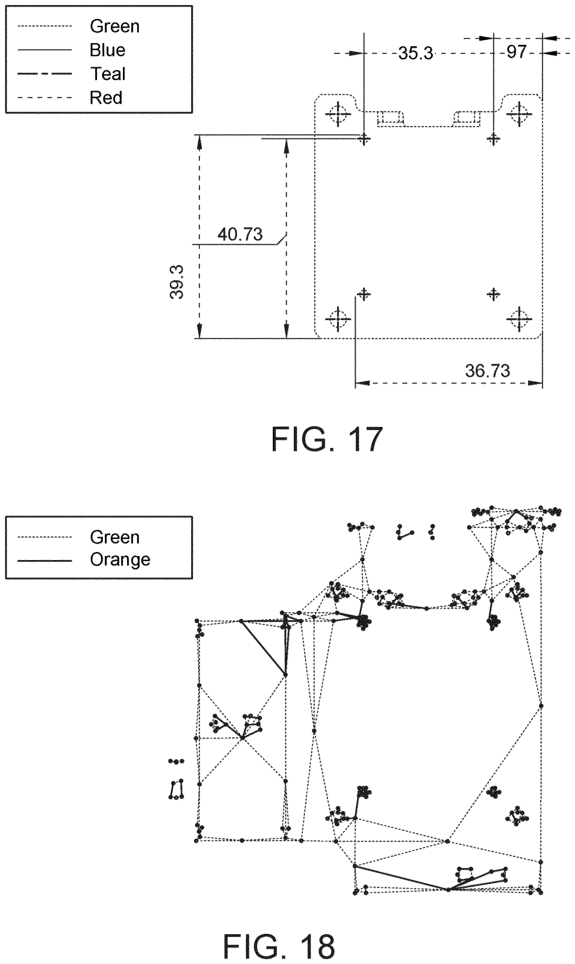

Labeling each graph of the training dataset may then comprise using the binary colored images (resulting from segmentation step 1) of the view represented by the graph. For each trace, the labelling may comprise going through its key pixels, and, at each pixel location, checking all colored pictures (*i.e*. for each semantic class). As previously discussed, there is 1 picture per class in order to have a clear difference between the pixels of the class and the others. This gives a better result than using a single picture with as many colors as classes because there is always ambiguity at junction points where colors tend to mix together. For each key pixel, the method may process the colored images to obtain a list of Boolean telling if the pixel was colored of the given color (*e.g.* green) or the other (*e.g.* red) for the given class, to deduce the trace class from the class that gets the greatest number of green votes. This is illustrated by FIG. 16. FIG. 17 shows an example of a colored graph pixel representation, and FIG. 18 shows the corresponding colored graph node representation. It is to be understood that the binary colored drawings (*e.g*. green and red) are used only for determining the labels during creation of the training dataset. During learning, the graph neural network (also referred to as "graph classification neural network" or "classification neural network"), may receive as input each non-colored graph (*i.e*. of each training example) and as a corresponding target (*i.e.* the output to learn to predict) the corresponding colored graph (*i.e.* with only the labels of each node), so that the neural network learns to predict the classes of each node starting from a non-colored graph (*i.e*. learns to generate the corresponding list of labels). During use, the neural network takes as input the non-colored graph and it predicts its labels.

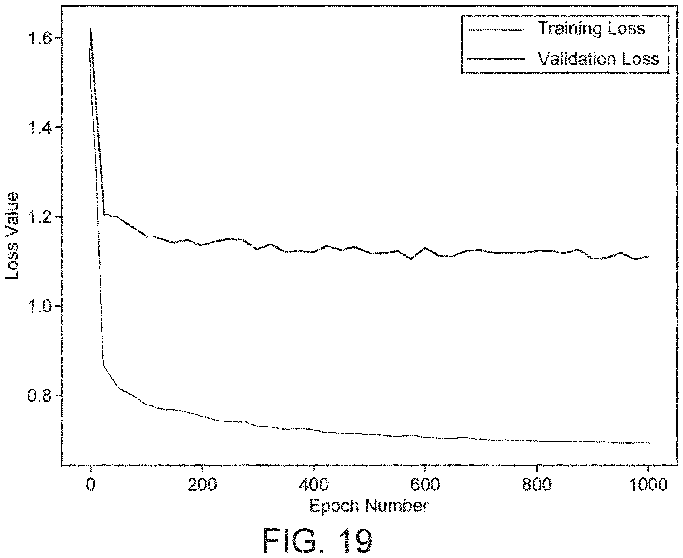

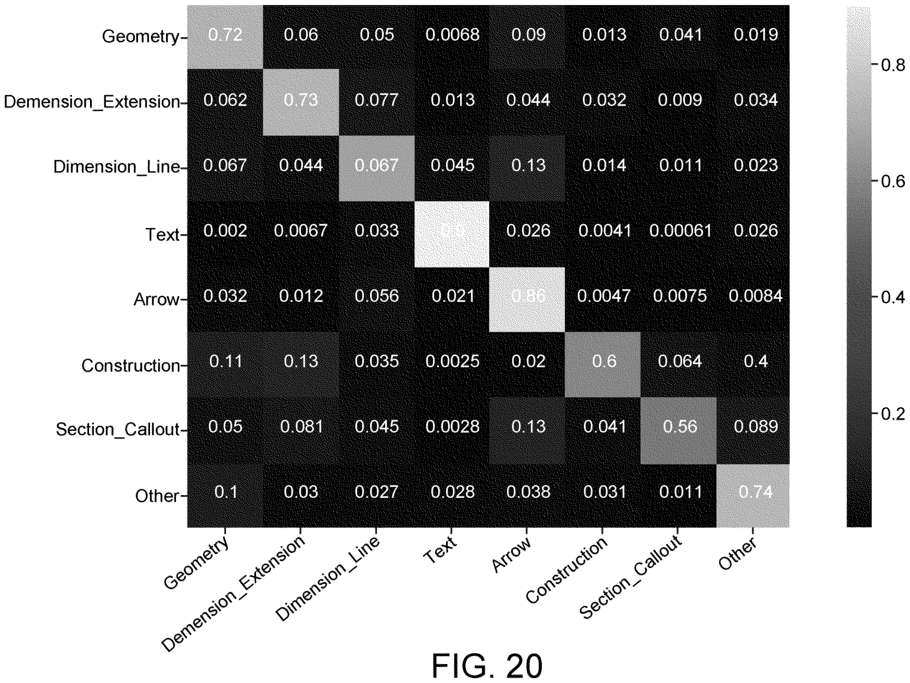

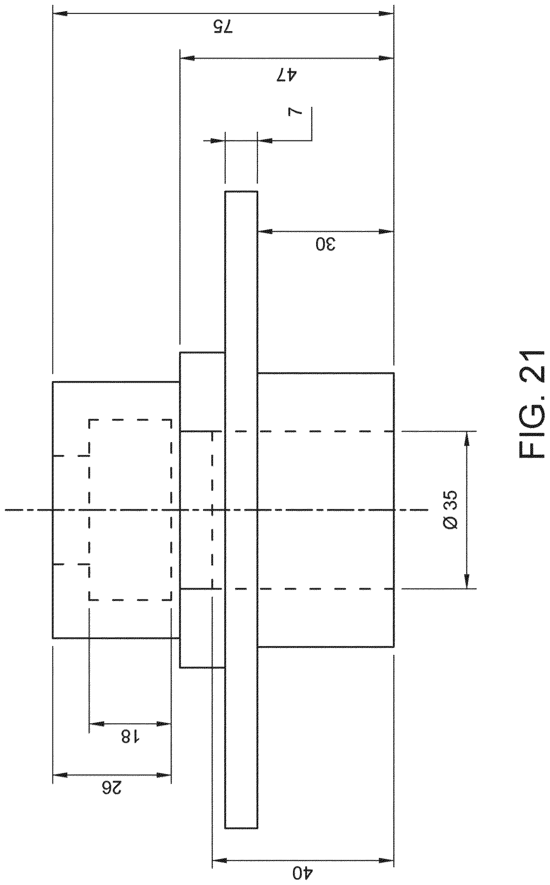

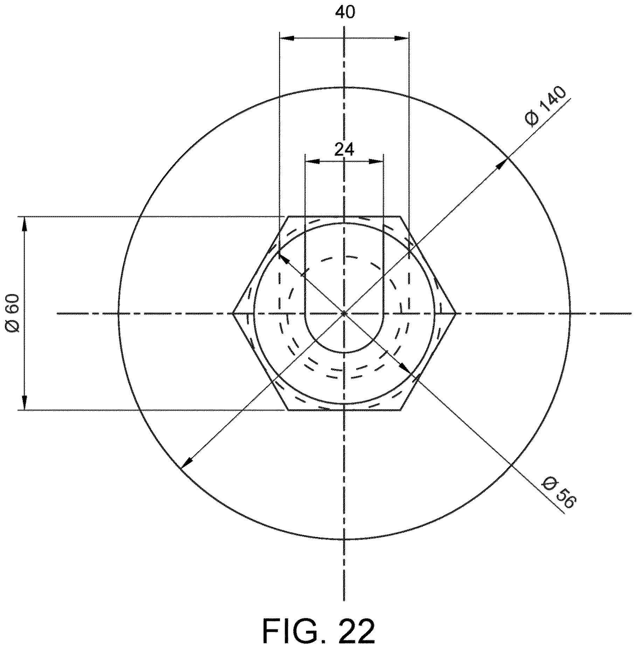

Implementations of the learning/training are now discussed. The task of the graph neural network/function is to classify the view lines. It is in fact classifying the nodes of the graph representing the view. Then from the classified graph the method may go back to the view image. The function's inputs are the node features, the edges, the graph features. The output consists in the node classes. The task is graph node classification. For that, the neural network may have an architecture consisting in GraphSage convolution layers to aggregate node information and linear layers to further interpret the features. Graph features are concatenated just after the node convolution layers. At every graph convolution layer, nodes aggregate information from their direct neighbors. This means that at most a node will see the information of other nodes at n jumps if n is the number of graph convolution layers. Finding the optimal number of layers is not trivial as increasing it considerably increase the number of training parameters and not always leads to better results. From multiple trials, the number of optimal layers is between 3 and 7. The results presented herein are using 5 layers. In the training dataset, the images are separated in training (90%), validation (5%), and test (5%). The neural network is trained to classify within the 8 semantic classes described above. The graphs are grouped by batches of 15. The model is trained for 1500 epochs using a Step learning rate scheduler (which divides the learning rate by 15% for each 100 epochs) with a starting learning rate of 10^(-3). The optimizer used for the gradient descent is Adam optimizer. A Cross-Entropy loss is used for the training. Training results are illustrated by FIG. 19 and FIG. 20. FIG.s 21-22 illustrate examples of classification results. A 79% node classification accuracy is obtained on test.

The graph method further comprises clustering, based on the graph topology, the nodes corresponding to the geometry class (*i.e*. classified in the geometry class) to reconstruct the geometries in the view. This means finding and grouping together, using the nodes classifications and the connection by an edge in the graph, the nodes that represent pixels forming a same geometry.

Clustering the nodes corresponding to the geometry class may comprise splitting each node having the geometry class into candidate segments. In other words, from the nodes classified as geometry, the method will reconstruct line segments and arc segments, and for that first performs this splitting step. Because of how the graph is created, a single node may represent several segments and arcs. As such, the method splits all nodes in curves that represents parts of line segments and arcs. The split may be performed by using the Douglas Peucker algorithm to approximate traces into series of segments (line segments and arc segments). The segments resulting from these splitting are called "candidate segments".

The method may then project these segments into a tangent space to group them based on thresholds applied to their length and deviation with the next segment. Specifically, the clustering of the geometry class nodes may further comprise grouping the candidate segments into either line segments or arc segments according to a grouping criterion. The grouping criterion rewards smallness of an angle deviation for line segments and similarity in length and angle deviation for arc segments using predetermined thresholds. In other words, candidate line segments are grouped if their angle deviation is smaller than a predefined threshold, *i.e.* if the segments are substantially aligned. Candidate arc segments are grouped together if they have a similar length (*e.g*. a difference of their lengths is smaller than a predefined threshold) and a similar angle deviation (*e.g*. a of their angle deviation is smaller than a predefined threshold, *i.e.* the arcs substantially follow a same curvature). These comparisons to the thresholds may be performed on the segments projected into the tangent space.

The clustering of the geometry class nodes may then comprise grouping together line segments and/or arc segments linking a pair of connected nodes (*i.e*. segments connecting pixels forming a pair of connected nodes in the graph are iteratively grouped based on the following criteria) to reconstruct the geometries. Two line segments are grouped if they a have a same axis and are connected by a segment extremity. Two arc segments are grouped if they have a same center and radius and are connected by at least one arc extremity.

The clustering may then further comprise computing, from the grouped segments, key points that are junctions between two segments or two arc centers. In other words, the key points are computed in each group of segments and, for each group, they represent the junctions between the segments of the group. The role of these key points is to represent the geometry more accurately with less variables.

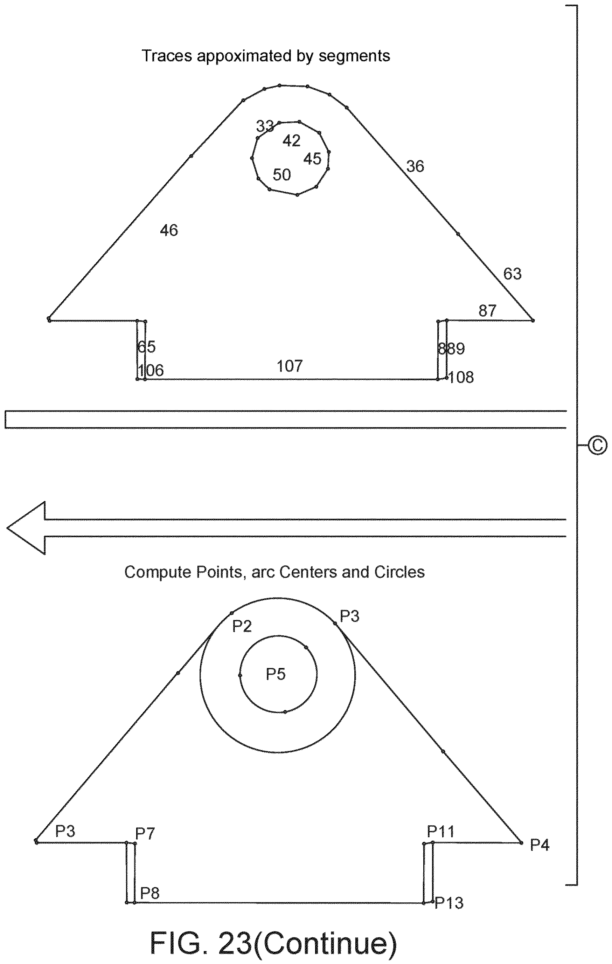

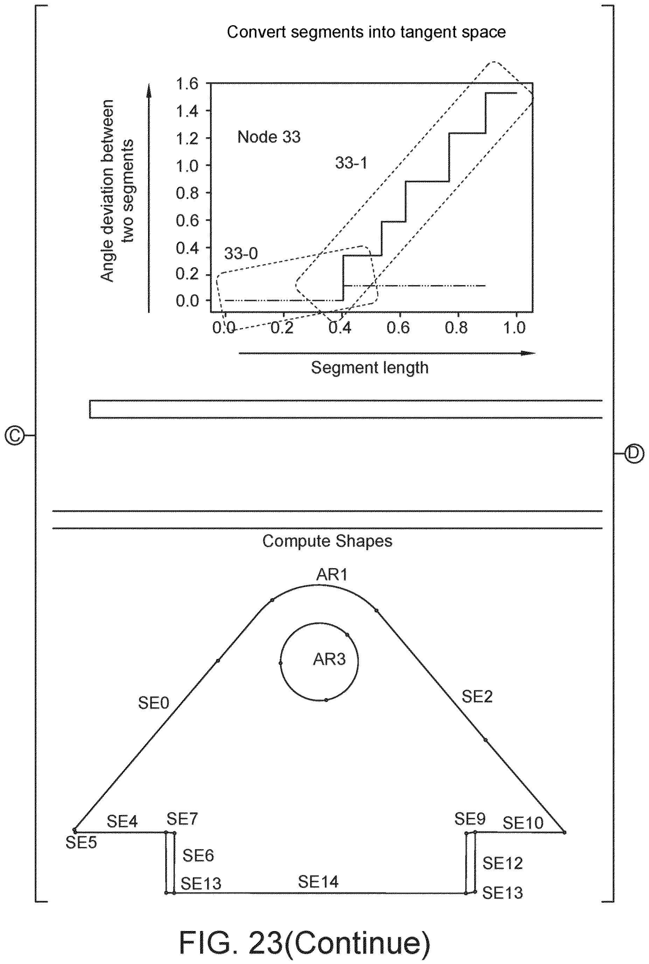

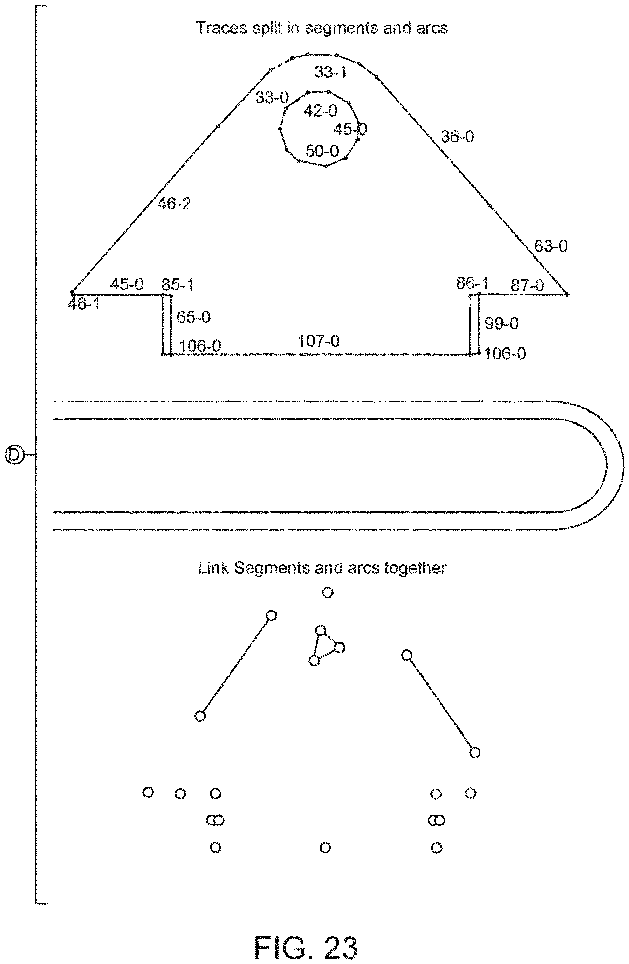

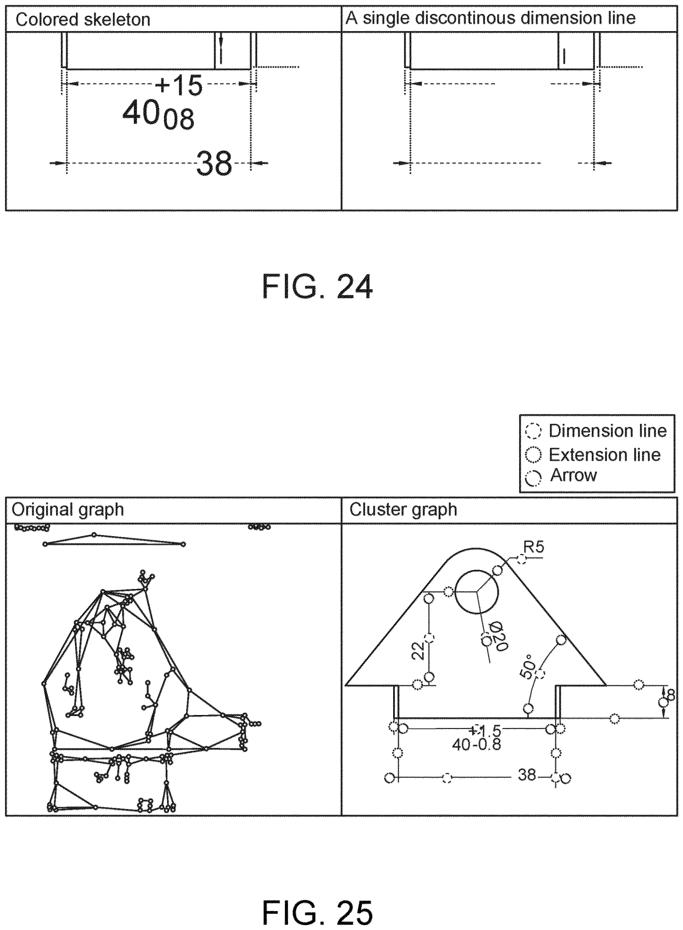

FIG. 23 illustrates a workflow of the step of clustering the geometry class nodes.

The clustering also comprises clustering the nodes corresponding to the dimension and dimension-related symbol classes, to reconstruct the technical annotations of the at least one view. This means finding and grouping together, using the nodes classifications and the connection by an edge in the graph, the nodes that represent pixels forming a same dimension or a same dimension-related symbol.

Clustering the nodes corresponding to the dimension-related symbol and dimension classes may comprises grouping nodes of the dimension and dimension-related symbol classes according to a grouping criterion. The grouping criterion rewards position and/or orientation similarity. In other words, two nodes of these classes are grouped when they represent elements of the view having a similar orientation and/or position, *i.e.* a difference between their positions is smaller than a predefined threshold and/or difference between their orientations is smaller than a predefined threshold. The dimension-related symbol class includes the subclasses arrow, dimension main line, and dimension extension line. Nodes of the "arrows" class may be grouped based only on their position. Arrows tends to be split into many small traces (many nodes) so their orientation may not be usable. Using their position, some errors may occur such as two arrows being merged into the same cluster, but this may be corrected in a further step by precisely finding candidate arrow heads for each arrow cluster. Nodes of the Dimension line and Extension line classes may be grouped based on their position and orientation. The specific thresholds used may be different between the two classes because extension lines tend to be split into far away traces if it goes through geometry segments. New merging conditions may then be applied on these base clusters to merge farther away clusters together. This new merging is very similar to the previous one but already having some clusters helps computing more accurate axis as the global cluster is less impacted by junction noise. FIG.s 24-25 illustrate results of the clustering of the corresponding to the dimension-related symbol and dimension classes.

The method further comprises filtering the clustered nodes (the nodes resulting from the clustering) of the dimension-related symbol class and dimension class according to the following rules:
- an arrow is in the same direction as a related dimension main line or connected to it; and
- a dimension extension line is perpendicular or locally perpendicular to a related dimension main line or a related arrow.

Filtering means that when there is an edge that connects two nodes which do not verify these rules, the edge is suppressed. In other words, if a clustered node representing an arrow is connected by an edge to a clustered node representing a dimension main line, but the arrow is not connected to the dimension main line nor in the same direction, the edge is suppressed. If a clustered node representing dimension extension line is connected by an edge to a clustered node representing a dimension main line or an arrow, but the dimension extension line is not perpendicular or locally perpendicular to the dimension main line or an arrow, the edge is suppressed. For each rule, the method may consider thresholds and margins (that is to evaluate perpendicularity or local perpendicularity or same direction) because the view transformation into a graph may not be pixel perfect. For the distance between nodes, the method may use the connected and proximity edges, or recompute the distance using the node key points and a point cloud distance algorithm.

Clusters inherit their nodes links, i.e. the edges connections to other nodes. The method may filter the node clusters based on the most probable candidate using a score computed from the axis distance and angle deviation in order to have at most 1 link between a pair of clusters. Arrow cluster to extension line cluster link score may be adjusted using the precise arrow head point and direction. This is to filter backward connections between the two that can happen when two dimension sets cross each other.

The graph method further comprises associating the reconstructed technical annotations to the reconstructed geometries based on a detected position of the technical annotations and based on the graph topology. This means that the method finds the appropriate annotations to associate to the appropriate geometries based on position proximity and connection in the graph topology.

Associating the reconstructed technical annotations to the reconstructed geometries based on a detected position of the technical annotations and based on the graph topology may comprises linking the reconstructed technical annotations to their corresponding, according to the graph topology, reconstructed geometries. This is done according to the following rules:
- for linear or angle dimension annotations, a dimension text is linked to a dimension main line, itself link to an arrow if any, itself linked to a dimension extension line if any, itself link to a geometry; and
- for diameter or radius dimension annotations, a dimension text is linked to a dimension main line, itself link to an arrow if any, itself link to a geometry.

Linking the reconstructed technical annotations to their corresponding, according to the graph topology, reconstructed geometries may comprise detecting the node to node interactions (*i.e*. an edge connection in the graph) between each dimension extension line (if any) and a geometry, each dimension main line and a geometry, and each arrow (if any) and a geometry. A constrained geometry is indeed always connected (by an edge in the graph) to either an arrow (if any) or a dimension extension line (if any) or a dimension main line. An unconstrained geometry (not all geometries are constrained by dimensions) may however not be linked to an arrow or a dimension extension line or dimension main line. A dimension main line is however always connected to an arrow or an extension line. Because the geometry nodes were decomposed into geometry shapes, the method may link the arrow and extension line nodes to the correct geometry shapes based on the connection point position. A score may be associated to each link calculated from the distance and axis deviation. Then for each cluster, only the best link (the one with the best score is kept).

Once the links arrow/dimension extension line to geometry have been created, the links to the dimension texts are created according to the above rules, which are nevertheless repeated for clarity:
- for linear or angle dimension annotations, a dimension text is linked to a dimension main line, itself link to an arrow if any, itself linked to a dimension extension line if any, itself link to a geometry; and
- for diameter or radius dimension annotations, a dimension text is linked to a dimension main line, itself link to an arrow if any, itself link to a geometry.

In other words, the method uses the graph to detect, on a node by node basis (similarly to above for linking arrow/dimension extension line to geometry), the dimension main line to be connected (because of edge connection in the graph) to each already created link arrow/dimension extension line to geometry, and the dimension text to link to the dimension line. In the case of angle or linear dimension annotation, the geometry is a line segment or a set of two line segments. In the case of diameter or radius dimension annotations, the geometry is an arc segment.

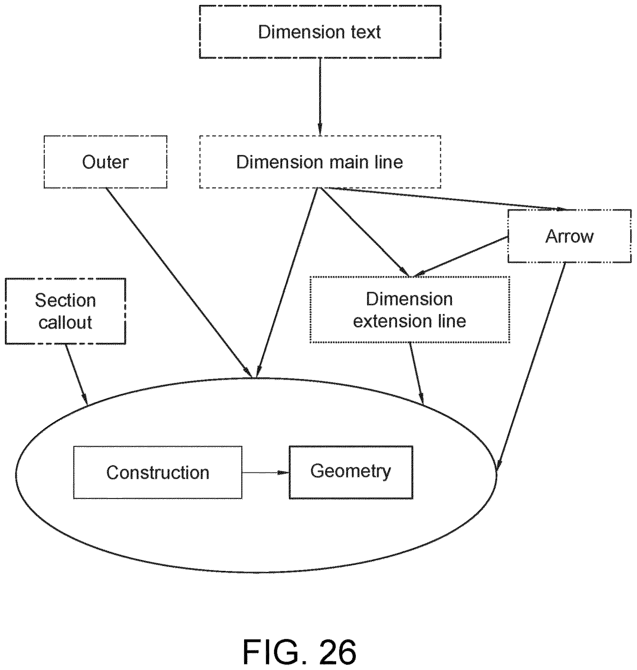

FIG. 26 illustrates the rules to associate the clustered nodes. The annotation semantic classes "other", "dimension extension line", "section callout" and "construction" are also represented. The method may consider drawings without these annotations. However, when these annotations are, at least in part, considered, the rules concerning them are, as shown by the figure are:
- section callout, dimension extension line, other to be linked to the related geometry, or the geometry construction line if any (itself linked to the geometry); and
- dimension main line or arrow to be linked to dimension extension line.

As shown by FIG. 26, the dimension text either points at a geometry or a construction element (either represented by a discontinuous line for axis, or absent in some cases for circle centers). There are two main path types from dimension text to either construction line or geometry:
- 1 Linear/Angle dimensions: Dimension text -> Dimension main Line (-> Arrow) -> Dimension extension Line Construction/Geometry
- 2 Diameter/Radius dimensions: Dimension text -> Dimension main Line (-> Arrow) -> Construction/Geometry.

The Arrow element may not always be present. For linear and angle dimensions this is not an obstacle as there is certainty as to where the dimension main line is pointing. However, the arrow element may be essential for diameter dimensions as it indicates the precise geometry arc.

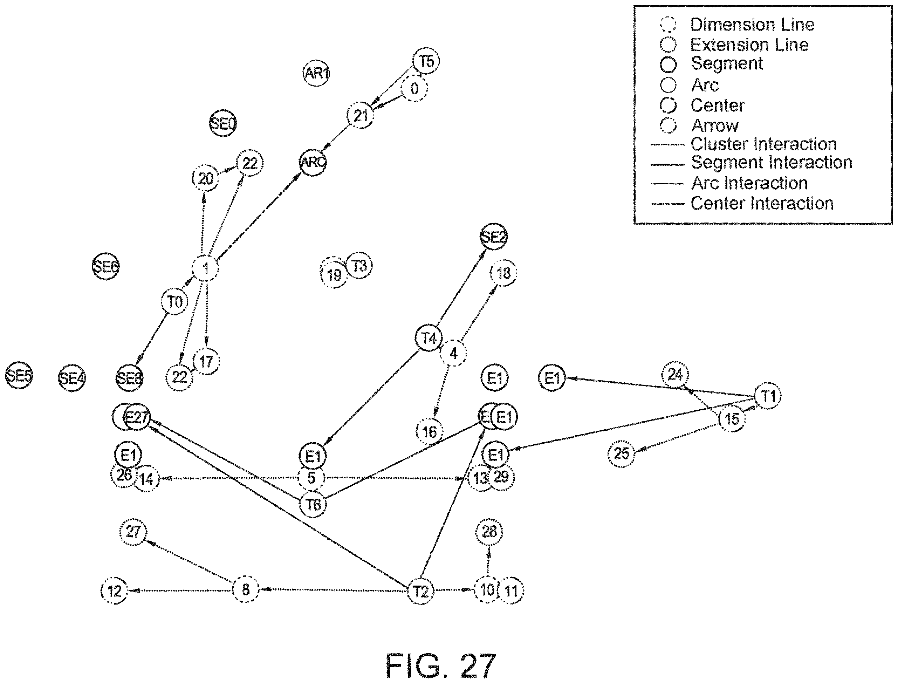

FIG. 27 illustrates an example of a graph with the linking completed.

Associating reconstructed technical annotations to reconstructed geometries based on a detected position of the technical annotations and based on the graph topology may further comprise detecting a text and/or symbol of the technical annotations and a position of the detected text and/or symbol. In other words, for each technical annotation, the method detects the text and/or symbol of the annotation and its position. This may be done by applying for example S20 of the reconstruction method or simply using the result of this step if it has already been applied (which is the case if the graph method is part of the reconstruction method), which provides for example as the position the center of the bounding box of the text and/or symbol for each dimension text technical annotation. Then, for such technical annotation, the method associates/links the detected text and/or symbol to a corresponding dimension line (dimension main line) based on a position proximity. To link text to dimension line, the method may split the text into either linear/angle dimension text or radius/diameter dimension text depending on the text value (contains a ° or R or ø). This may be based on the detection performed at S30 of the reconstruction method, either by performing S30 or simply using the result of this step if it has already been applied (which is the case if the graph method 2 is part of the reconstruction method). Then the method may compute the distance between text and dimension line clusters, and recursively select the best candidate (*i.e*. the closest one, *i.e.* dimension text is associated to the closest dimension line).

Associating reconstructed technical annotations to reconstructed geometries based on a detected position of the technical annotations and based on the graph topology may further comprise filtering the associated detected text and/or symbol of each reconstructed technical annotation according to the following rules:
- a linear or angle dimension text must be linked to two geometries; and
- a radius or diameter dimension text must be linked to a single geometry. If there are several candidates, the method may choose the geometry closest to the arrow element connected to the dimension line and farthest away from the dimension text.

The method suppresses the associations when these rules are not respected.

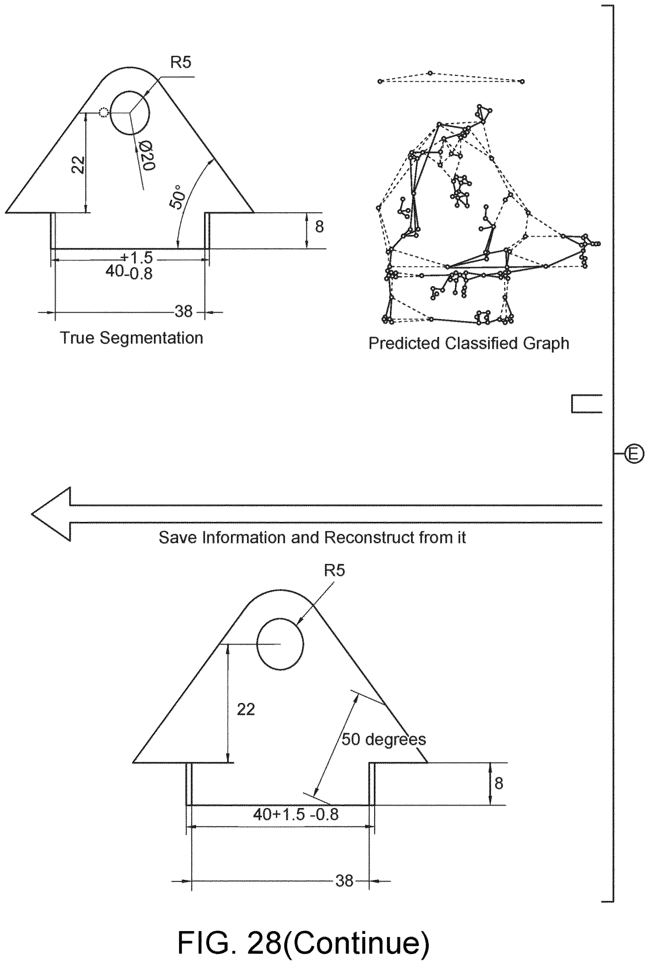

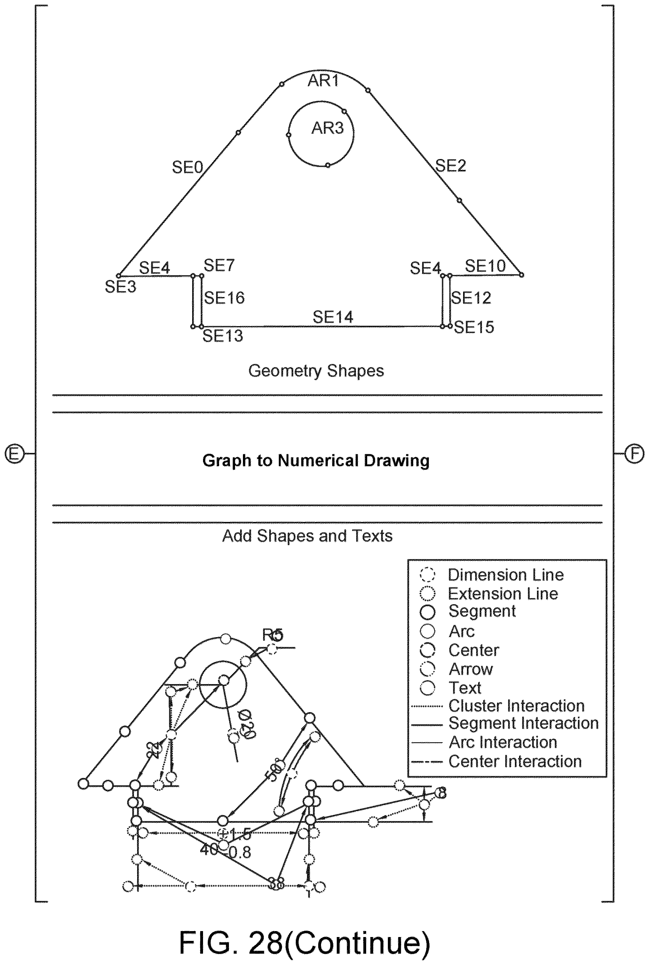

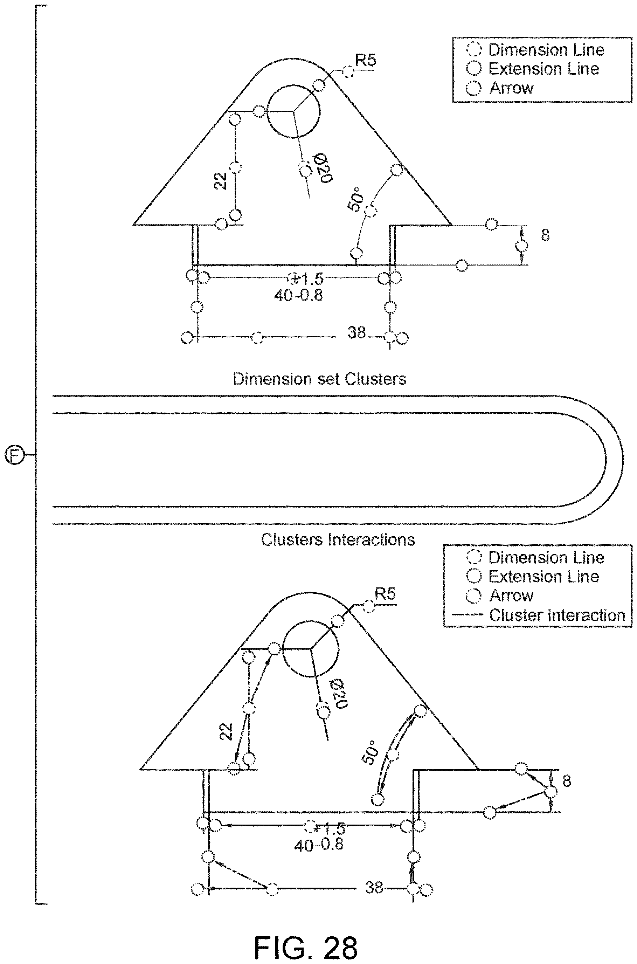

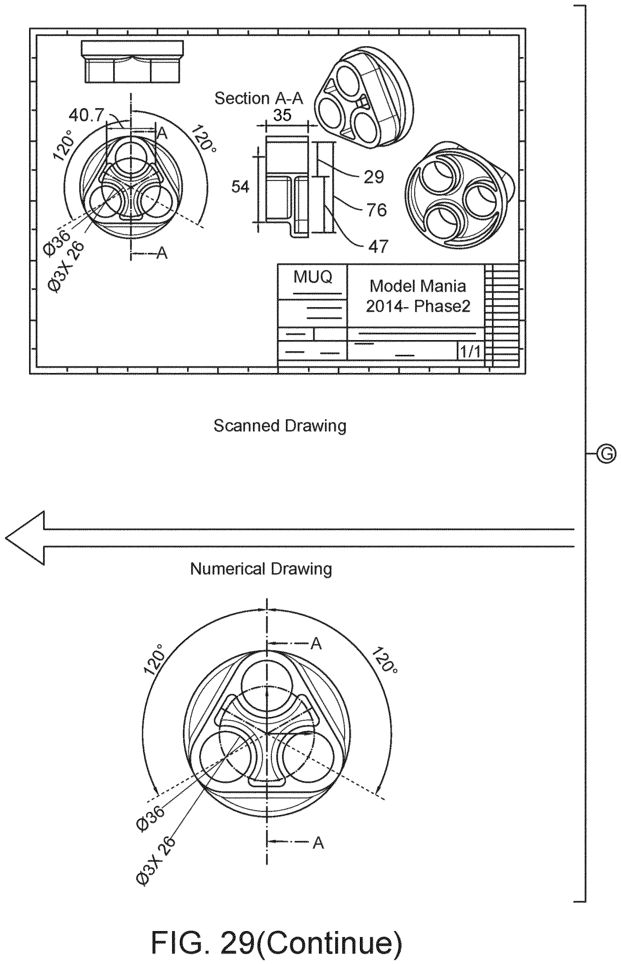

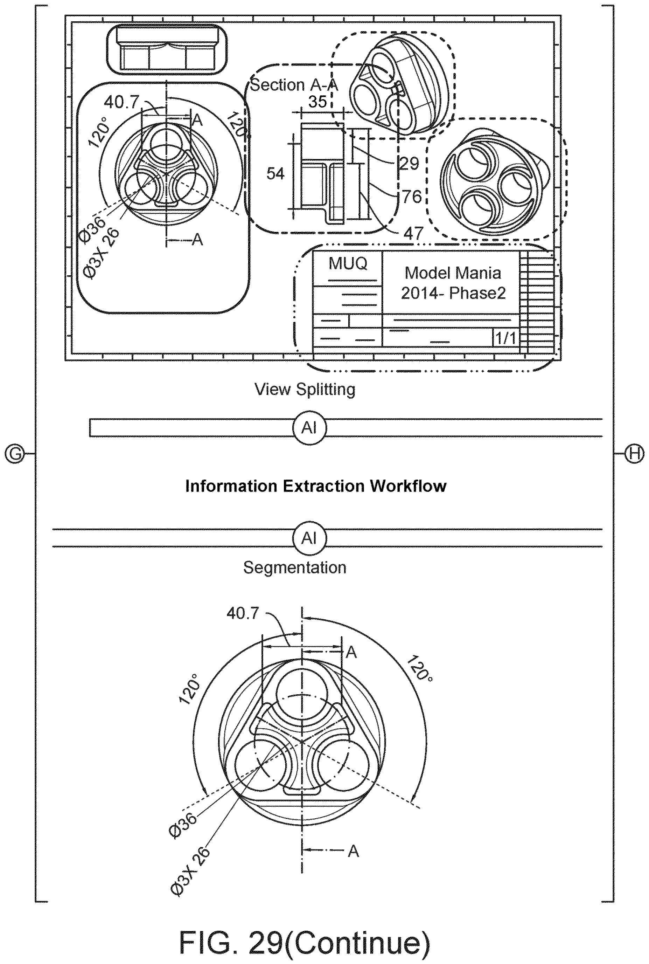

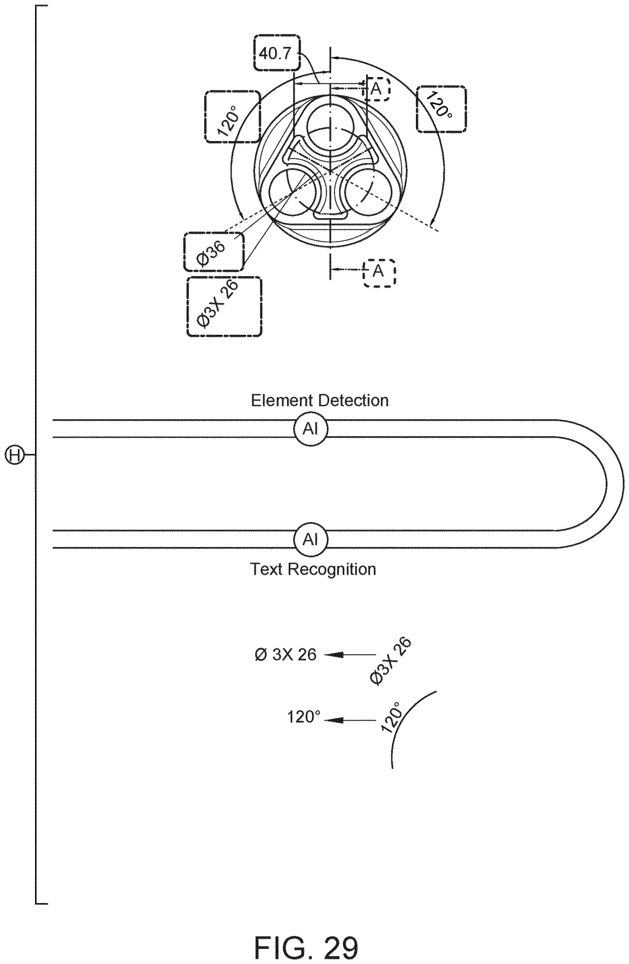

FIG. 28 shows a workflow illustrating the graph method. FIG. 29 shows a flowchart illustrating the reconstruction method.

Once the association between the nodes is done (either in the reconstruction method or in the graph method), at the end, the result is a simplified directed graph. The previous graph nodes are grouped as clusters and only the main edge connections are kept. The geometry is constrained with the dimensions. Based on this output graph, the reconstruction method or the graph method may further comprise recreating a numerical drawing of the input view/technical drawing. Conversion of the graph into a numerical drawing is known in the art and may be done by any known method configured for that purpose. The numerical drawing composed of the identified simple geometric shapes. The expected numerical drawing is at least as accurate as the directed semantic graph and because the geometry is constrained, the shape dimensions are exact and editable.

The numerical drawing may be used in one or any combination of the following further steps (which the methods may comprise):
- by layering the numerical drawing in transparency with the pixel image drawing, visually checking the results of the conversion. The designer may then validate or modify the results with interactive drawing tools;
- recreating the 3D of the technical object represented, by projecting the numerical drawing (2D) geometry, into 3D. This 3D geometry may comprise planes in 3D, points, lines, circles or any 2D profiles with their dimensions and positions, which may be modified as well. This geometry may be used, completely or partially to create 3D CAD features, such as pads, pockets, holes, or the like.
- automatically positioning constructions axis and profiles that form the 3D part skeleton into a 3D space. Features are applied using these axis and profiles to efficiently generate the 3D. The advantage of using construction axis is to allow the user some freedom in the reconstruction process depending on its specific needs and habits. The skeleton axis may be created by intersecting views together and deducing hole and revolution axis, main pads and pockets.

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 30 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

**1.** A computer-implemented method for processing a graph representing an image of a technical drawing comprising at least one view and at least one technical annotation, the method comprising, for each view of the at least one view:
- providing the graph, the graph comprising nodes and edges, each node corresponding to a classification of one or more pixels in the view into a semantic class of a predetermined set of semantic classes, each edge connecting two nodes either if the two nodes represent neighboring pixels or if the two nodes represent pixels distant from each other below a predetermined threshold, the set of semantic classes including at least the following classes: geometry, dimension, dimension-related symbol; and
- clustering, based on the graph topology:
∘ nodes corresponding to the geometry class, to reconstruct the geometries in the view; and
∘ nodes corresponding to the dimension and dimension-related symbol classes, to reconstruct the technical annotations of the view; and
- associating reconstructed technical annotations to reconstructed geometries based on a detected position of the technical annotations and based on the graph topology.

**2.** The method of claim 1, wherein providing the graph comprises:
- determining a skeleton of the view by making lines in the technical drawing having a thickness smaller than a predefined threshold;
- determining traces of the skeleton, each trace being a line ending at junction points, a junction point being a pixel of the skeleton having at least three neighbors in the skeleton; and
- defining each graph node as representing a respective trace.

**3.** The method of claim 2, wherein making lines in the view having a thickness smaller than a predefined threshold consists in making the lines having 1 pixel thick.

**4.** The method of claim 2 or 3, wherein the providing of the graph further comprises defining the edges of the graph by:
- defining first edges each connecting two nodes if the two traces represented by the two nodes are pixelwise connected; and
- defining second edges each connecting two nodes if the two traces represented by the two nodes are not pixelwise connected but distant below a predefined number of pixels.

**5.** The method of any one of claims 2 to 4, wherein providing the graph further comprises applying a machine-learnt segmentation function configured to label each node of the graph into a semantic class of the set of semantic classes.

**6.** The method of claim 5, wherein the method further comprises, prior to providing the graph, machine-learning the segmentation function.

**7.** The method of any one of claims 1 to 6, wherein clustering the nodes corresponding to the geometry class comprises:
- splitting each node having the geometry class into candidate segments;
- grouping the candidate segments into either line segments or arc segments according to a grouping criterion which rewards smallness of an angle deviation for line segments and similarity in length and angle deviation for arc segments using predetermined thresholds; and
- grouping together line segments and/or arc segments linking a pair of connected nodes to reconstruct the geometries, wherein two line segments are grouped if they a have a same axis and are connected by a segment extremity and two arc segments are grouped if they have a same center and radius and are connected by at least one arc extremity.

**8.** The method of any one of claims 1 to 7, wherein clustering the nodes corresponding to the dimension-related symbol and dimension classes comprises grouping nodes of the dimension and dimension-related symbol classes according to a grouping criterion that rewards position and/or orientation similarity.

**9.** The method of any one of claims 1 to 8, wherein the dimension-related symbol class includes the subclasses arrow, dimension main line, and dimension extension line, and wherein the method further comprises filtering the clustered nodes of the dimension-related symbol class and dimension class according to the following rules:
- an arrow is in the same direction as a related dimension main line or connected to it; and
- a dimension extension line is perpendicular or locally perpendicular to a related dimension main line or a related arrow.

**10.** The method of claim 9, wherein associating reconstructed technical annotations to reconstructed geometries based on a detected position of the technical annotations and based on the graph topology comprises linking the reconstructed technical annotations to their corresponding, according to the graph topology, reconstructed geometries, according to the following rules:
- for linear or angle dimension annotations, a dimension text is linked to a dimension main line, itself link to an arrow if any, itself linked to a dimension extension line if any, itself link to a geometry; and
- for diameter or radius dimension annotations, a dimension text is linked to a dimension main line, itself link to an arrow if any, itself link to a geometry.

**11.** The method of claim 10, wherein associating reconstructed technical annotations to reconstructed geometries based on a detected position of the technical annotations and based on the graph topology further comprises:
- detecting a text and/or symbol of the technical annotations and a position of the detected text and/or symbol; and
- for each reconstructed technical annotation, associating the detected text and/or symbol to a corresponding dimension line based on a position proximity.

**12.** The method of claim 11, wherein associating reconstructed technical annotations to reconstructed geometries based on a detected position of the technical annotations and based on the graph topology further comprises filtering the associated detected text and/or symbol of each reconstructed technical annotation according to the following rules:
- a linear or angle dimension text must be linked to two geometries; and
- a radius or diameter dimension text must be linked to a single geometry.

**12.** A computer program comprising instructions which, when executed by a computer system, cause the system to perform the method of any one of claims 1 to 11.

**13.** A computer-readable data storage medium having recorded thereon the computer program of claim 12.

**14.** A computer system comprising a processor coupled to a memory, the memory having recorded thereon the computer program of claim 12.
